(19) **Europäisches Patentamt**
**European Patent Office**
**Office européen des brevets**

(11) **EP 2 247 019 A1**

(12) **EUROPEAN PATENT APPLICATION**
published in accordance with Art. 153(4) EPC

(43) Date of publication:
**03.11.2010 Bulletin 2010/44**

(21) Application number: **09711786.5**

(22) Date of filing: **19.02.2009**

(51) Int Cl.:
$H04L\ 1/18$ (2006.01)     $H04J\ 11/00$ (2006.01)
$H04J\ 99/00$ (2009.01)

(86) International application number:
**PCT/JP2009/052903**

(87) International publication number:
**WO 2009/104683 (27.08.2009 Gazette 2009/35)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **21.02.2008 JP 2008040007**

(71) Applicant: **Sharp Kabushiki Kaisha**
**Osaka-shi**
**Osaka 545-8522 (JP)**

(72) Inventors:
• **SHIMEZAWA, Kazuyuki**
  **Osaka 545-8522 (JP)**
• **YOSHIMOTO, Takashi**
  **Osaka 545-8522 (JP)**
• **YAMADA, Ryota**
  **Osaka 545-8522 (JP)**
• **NOGAMI, Toshizo**
  **Osaka 545-8522 (JP)**

(74) Representative: **Müller - Hoffmann & Partner**
**Patentanwälte**
**Innere Wiener Strasse 17**
**81667 München (DE)**

(54) **COMMUNICATION DEVICE, COMMUNICATION SYSTEM, RECEPTION METHOD, AND COMMUNICATION METHOD**

(57)     A communication device used in a communication system requesting a retransmission signal when detecting an error in a received initial transmission signal, the communication device including: a reception unit which receives the initial transmission signal and the retransmission signal; a synthesis unit which synthesizes a signal based on a retransmission signal and at least one of a signal based on the retransmission signal or the initial transmission signal, when the reception unit receives the retransmission signal; and an iterative detection and decoding unit which performs signal decoding based on a signal obtained through the synthesis in the synthesis unit, thereby reducing the number of retransmissions and the number of iterations of the iteration process.

FIG. 2

**Description**

TECHNICAL FIELD

The present invention relates to a communication device, a communication system, a reception method, and a communication method, and more particularly, to a communication device, a communication system, a reception method, and a communication method to which automatic repeat request control is applied.
This application claims priority to and the benefit of Japanese Patent Applications No. 2008-040007 filed on February 21, 2008, the contents of which are incorporated herein by reference.

BACKGROUND ART

For example, in known multi-carrier transmissions such as an orthogonal frequency division multiplexing (OFDM) scheme and an orthogonal frequency division multiple access (OFDMA) scheme, a transmitter can add a guard interval (GI) to reduce effects of multi-path interference.
In such schemes, when there is an incoming wave over the guard interval section, inter-symbol interference (ISI) occurs as a previous symbol enters a fast Fourier transform (FFT) section or inter-carrier interference (ICI) occurs as a gap between symbols, that is, a signal discontinuity section, enters the FFT section.
A method of preventing characteristic degradation due to ISI or ICI when there are incoming waves over the GI has been proposed in Patent Document 1. In this conventional technique, after a demodulation operation is performed once, an error correction result (an output of a MAP decoder) is used to create a duplicated signal (replica signal) of an undesired sub-carrier including the above-described ISI component and the above-described ICI component, and then a signal obtained by removing the created duplicated signal from a reception signal is subjected to the demodulation operation again, thereby preventing the characteristic degradation due to ISI and ICI.
As combinations of the above-described multi-carrier transmission and a code division multiplexing (CDM) scheme, a multi carrier-code division multiplexing (MC-CDM) scheme, a multi carrier-code division multiple access (MC-CDMA) scheme, a spread-orthogonal frequency and code division multiplexing (OFCDM) scheme, and so on have been proposed.
According to these schemes, in reception signals received by performing a code multiplexing process on signals by frequency-direction spreading using an orthogonal code such as the Walsh-Hadamard code under a multi-path environment, orthogonality between orthogonal codes is not maintained when there is a frequency variation in a period of the orthogonal codes. Therefore, multi-code interference (MCI) may occur, thereby causing the characteristic degradation.
Methods of preventing the characteristic degradation caused by the collapse of the orthogonality between the orthogonal codes are disclosed in Patent Document 2 and Non-patent Document 1. In such prior art, in order to remove the multi-code interference by a code multiplexing process during MC-CDM communication, even though there is a difference between a downlink and an uplink, the improvement in the characteristics is achieved by generating a reproduced signal (a replica signal) using data after correction of an error or de-spreading, and then by performing a demodulation process again on the signal obtained by removing a signal other than desired codes using the reproduced signal.
According to the common method of these techniques, an interference signal is generated based on the replica signal generated after a signal received in a reception device is demodulated in order to cancel the interferences such as ISI, ICI, and MCI. Moreover, by repeating this process, accuracy of the replica signal is improved and thus the interferences can be cancelled with accuracy.
However, even when the iteration process is performed by the interference canceller, the interferences may not be completely removed when ISI, ICI, and MCI are great. Moreover, desired data may not be demodulated normally and an error may occur.
On the other hand, a known method of controlling an error is hybrid automatic repeat request (HARQ) in which an automatic repeat request (ARQ) and an error correction code such as turbo coding are combined. In particular, well known methods of HARQ include chase combining (CC) and incremental redundancy (IR), as disclosed in Non-patent Document 2 and Non-patent Document 3.
For example, in HARQ using CC, retransmission of a completely identical packet is requested when an error is detected in a reception packet. Reception quality can be improved by synthesizing the two reception packets. In HARQ using IR, redundant bits are separated and the separated redundant bits are sequentially retransmitted little by little. For this reason, since the coding rate may decrease with an increase in the number of retransmissions, error correction capability is improved.

Patent Document 1: Japanese Unexamined Patent Publication, First Publication No. 2004-221702
Patent Document 2: Japanese Unexamined Patent Publication, First Publication No. 2005-198223

Non-patent Document 1: Y. Zhou, J. Wang, and M. Sawahashi, "Downlink Transmission of Broadband OFCDM Systems-Part I: Hybrid Detection," IEEE Transaction on Communication, Vol. 53, Issue 4, pp. 718-729, April 2005.
Non-patent Document 2: D. Chase, "Code combining-A maximum likelihood decoding approach for combing and arbitrary number of noisy packets," IEEE Trans. Commun., vol. COM-33, pp. 385-393, May 1985.
Non-patent Document 3: J. Hagenauer, "Rate-compatible punctured convolutional codes (RCPC codes) and their application," IEEE Trans. Commun., vol. 36, pp. 389-400, April 1988.

DISCLOSURE OF INVENTION

Problem to be Solved by the Invention

In the above-described HARQ, however, a problem may arise in that when large interference occurs, data errors are not sufficiently corrected and transmission quality deteriorates, thereby increasing the number of iterations of the iteration process and the number of retransmissions.

The present invention has been achieved in view of the above circumstances, and it is an object of the present invention to provide a communication device, a communication system, a reception method, and a communication method capable of reducing the number of retransmissions and the number of iterations of an iteration process in a communication system using HARQ.

Means for Solving the Problem

The present invention has been made to solve the above-described problems. According to an aspect of the present invention, there is provided a communication device used in a communication system performing a hybrid automatic repeat request to request a retransmission signal when detecting an error in a received initial transmission signal, the communication device including: a reception unit which receives the initial transmission signal and the retransmission signal; a synthesis unit which synthesizes a signal based on a retransmission signal and at least one of a signal based on a retransmission signal received before the retransmission signal and a signal based on the initial transmission signal, when the reception unit receives the retransmission signal; and an iterative detection and decoding unit which performs an iteration process of repeating signal detection and signal decoding on the signal received by the reception unit or a signal received previously by the reception unit and performs signal decoding based on a signal obtained through the synthesis in the synthesis unit in every iteration process when the reception unit receives the retransmission signal.

In the communication device according to the aspect of the present invention, the communication device further includes: a synthesis signal storage unit which stores a signal detection result of the iterative detection and decoding unit, wherein the iterative detection and decoding unit performs signal decoding based on the signal obtained through the synthesis in the synthesis unit in every iteration process when the reception unit receives the retransmission signal, and when the reception unit receives the retransmission signal, the synthesis unit synthesizes, in every iteration process of the iterative detection and decoding unit, the signal detection result of the iterative detection and decoding unit and at least one of the signal detection results stored in the synthesis signal storage unit, which are signal detection results of the iterative detection and decoding unit when the reception unit previously receives retransmission signals.

In the communication device according to the aspect of the present invention, the communication device further includes: a reception signal storage unit which stores a signal received by the reception unit, wherein the signal detection performed by the iterative detection and decoding unit is performed on either one of the signal received previously by the reception unit and stored in the reception signal storage unit and the signal received by the reception unit in every iteration process.

In the communication device according to the aspect of the present invention, the signal detection performed by the iterative detection and decoding unit is performed on either one of the initial transmission signal stored in the reception signal storage unit and the signal received by the reception unit in every iteration process.

In the communication device according to the aspect of the present invention, the signal detection performed by the iterative detection and decoding unit is performed on either one of the signal received by the reception unit and the signal stored in the reception signal storage unit and received immediately before the signal received by the reception unit in every iteration process.

In the communication device according to the aspect of the present invention, the synthesis signal storage unit stores either one of the signal detection results obtained in every iteration by the iteration signal detection unit in every iteration process.

In the communication device according to the aspect of the present invention, the synthesis signal storage unit stores the signal detection result obtained in every iteration by the iteration signal detection unit.

In the communication device according to the aspect of the present invention, a signal to be synthesized by the synthesis unit necessarily includes the signal detection result obtained by the iterative detection and decoding unit when the reception unit previously receives the initial transmission signal.

In the communication device according to the aspect of the present invention, a signal to be synthesized by the synthesis unit is likelihood information indicating whether each bit is 1 or 0 using a likelihood ratio.

In the communication device according to the aspect of the present invention, the iterative detection and decoding unit performs signal detection on a signal received by the reception unit or a signal received previously by the reception unit by removing an interference component using an interference signal replica generated based on a result of the signal decoding.

In the communication device according to the aspect of the present invention, the iterative detection and decoding unit generates an interference signal replica of at least one interference component of inter-symbol interference, carrier interference, and inter-code interference to remove the interference component.

In the communication device according to the aspect of the present invention, the iterative detection and decoding unit performs the signal detection on a signal received by the reception unit or a signal received previously by the reception unit based on a result of the signal decoding.

In the communication device according to the aspect of the present invention, when the reception unit receives a retransmission signal, the synthesis unit synthesizes the retransmission signal received by the reception unit and at least one of the retransmission signal received before the retransmission signal and the initial transmission signal, and when the reception unit receives the retransmission signal, the iterative detection and decoding unit performs the signal detection and the signal decoding based on the signal obtained through the synthesis in the synthesized unit in every iteration process.

In the communication device according to the aspect of the present invention, the reception unit receives a signal in which a stream is spatially multiplexed, from each of a plurality of antennas, as well as the initial transmission signal and the retransmission signal, and the iterative detection and decoding unit separates a signal of the stream from the signal received by the reception unit, when performing the signal detection.

According to another aspect of the present invention, there is provided a communication system including first and second communication devices, the second communication device performing a hybrid automatic repeat request to request a retransmission signal when detecting an error in an initial transmission signal received from the first communication device, wherein the first communication device includes: a transmission unit which transmits the initial transmission signal and at least one retransmission signal, and the second communication device includes: a reception unit which receives the initial transmission signal and the retransmission signal; a synthesis unit which synthesizes a signal based on a retransmission signal and at least one of a signal based on a retransmission signal received before the retransmission signal and a signal based on the initial transmission signal, when the reception unit receives the retransmission signal; and an iterative detection and decoding unit which performs an iteration process of repeating signal detection and signal decoding on the signal received by the reception unit or a signal received previously by the reception unit and performs signal decoding based on a signal obtained through the synthesis in the synthesis unit in every iteration process, when the reception unit receives the retransmission signal.

According to still another aspect of the present invention, there is provided a reception method in a communication device used in a communication system performing a hybrid automatic repeat request to request a retransmission signal when detecting an error in a received initial transmission signal, the reception method including: receiving, by the communication device, the retransmission signal; synthesizing, by the communication device, a signal based on the retransmission signal received in the reception and at least one of a signal based on a retransmission signal received before the retransmission signal and a signal based on the initial transmission signal; and performing, by the communication device, an iteration process of repeating signal detection and signal decoding on the signal received in the reception or the signal received previously and performing signal decoding based on a signal obtained through the synthesis in the synthesis in every iteration process.

According to still another aspect of the present invention, there is provided a communication method in a communication system including first and second communication devices, the second communication device performing a hybrid automatic repeat request to request a retransmission signal when detecting an error in an initial transmission signal received from the first communication device, wherein the communication method includes: transmitting, by the first communication device, the initial transmission signal; receiving, by the second communication device, the initial transmission signal and requesting the first communication device to transmit the retransmission signal when detecting an error in the received initial transmission signal; receiving, by the first communication device, the request for the retransmission signal and transmitting the retransmission signal; receiving, by the second communication device, the retransmission signal; synthesizing, by the second communication device, a signal based on the retransmission signal received in the retransmission signal reception and at least one of a signal based on a retransmission signal received before the retransmission signal and a signal based on the initial transmission signal; and performing, by the second communication device, an iteration process of repeating signal detection and signal decoding on the signal received in the retransmission signal reception or the signal received previously and performing signal decoding based on a signal obtained through the synthesis in the synthesis in every iteration process.

Effect of the Invention

According to the present invention, the number of retransmissions and the number of iterations of the iteration process in HARQ can be reduced by synthesizing the signal based on a retransmission signal and at least one of a signal based on a retransmission signal received before the retransmission signal and a signal based on an initial transmission signal, and using a signal of the synthesis result improved in reliability by the retransmission signal.

BRIEF DESCRIPTION OF THE DRAWINGS

FIG. 1 is a schematic block diagram illustrating the configuration of a packet transmission device 1 according to a first embodiment of the present invention.
FIG. 2 is a schematic block diagram illustrating the configuration of a packet reception device 2 according to the first embodiment.
FIG. 3 is a schematic block diagram illustrating the configuration of an interference cancellation unit 206 according to this embodiment.
FIG. 4 is a schematic block diagram illustrating the configuration of an HARQ processing unit 211 according to the first embodiment.
FIG. 5 is a schematic block diagram illustrating the configuration of a signal decoding unit 212 according to the first embodiment.
FIG. 6 is a schematic block diagram illustrating the configuration of a replica signal generation unit 214 according to the first embodiment.
FIG. 7 is a flowchart illustrating the operation of the packet reception device 2 according to the first embodiment.
FIG. 8 is a schematic block diagram illustrating the configuration of a coding unit 101 according to the first embodiment.
FIG. 9 is a diagram illustrating an example of a puncture pattern used by a puncturing unit 126 according to the first embodiment.
FIG. 10 is a schematic block diagram illustrating the configuration of an error correction decoding unit 251 when CC is used in HARQ according to the first embodiment.
FIG. 11 is a diagram illustrating an example of the puncture pattern used by a de-puncturing unit 253 when IR is used in HARQ according to the first embodiment.
FIG. 12 is a diagram illustrating a synthesis example of a packet synthesis unit 411 when the puncture pattern in FIG. 11 is used according to the first embodiment.
FIG. 13 is a schematic block diagram illustrating the configuration of a packet transmission device 3 according to a second embodiment of the present invention.
FIG. 14 is a schematic block diagram illustrating the configuration of an HARQ processing unit 305 according to the second embodiment.
FIG. 15 is a schematic block diagram illustrating the configuration of a signal decoding unit 306 according to the second embodiment.
FIG. 16 is a schematic block diagram illustrating the configuration of a packet reception device 4 according to a third embodiment of the present invention.
FIG. 17 is a schematic block diagram illustrating the configuration of an HARQ processing unit 401 according to the third embodiment.
FIG. 18 is a schematic block diagram illustrating the configuration of an interference cancellation unit 402 according to the third embodiment.
FIG. 19 is a schematic block diagram illustrating the configuration of a packet transmission device 5 according to a fourth embodiment of the present invention.
FIG. 20 is a schematic block diagram illustrating the configuration of a packet reception device 6 according to the fourth embodiment.
FIG. 21 is a schematic block diagram illustrating the configuration of a signal separation unit 606 according to the fourth embodiment.
FIG. 22 is a diagram illustrating a sequence example when initial transmission packets and retransmission packets coexist during MIMO transmission according to the fourth embodiment.

Reference Symbols

| | |
|---|---|
| 1, 5: PACKET | TRANSMISSION DEVICE |
| 2, 3, 4, 6: | PACKET RECEPTION DEVICE |
| 101,501: | CODING UNIT |
| 102, 502: | INTERLEAVING UNIT |
| 103, 503: | MODULATION UNIT |
| 104, 504: | IFFT UNIT |
| 105, 505: | TRANSMISSION SIGNAL INFORMATION MULTIPLEXING UNIT |
| 106, 506: | GI INSERTION UNIT |
| 107, 507: | RADIO TRANSMISSION UNIT |
| 111, 511: | RADIO RECEPTION UNIT |
| 112,512: | GI REMOVAL UNIT |
| 113, 513: | FFT UNIT |
| 114,514: | DEMODULATION UNIT |
| 115, 515: | RESPONSE SIGNAL DETERMINATION UNIT |
| 116, 516: | TRANSMISSION SIGNAL STORAGE UNIT |
| 121: ERROR | DETECTION CODING UNIT |
| 122: ERROR | CORRECTION CODING UNIT |
| 123: | INTERNAL INTERLEAVER UNIT |
| 124: | FIRST CODER |
| 125: | SECOND CODER |
| 126: | PUNCTURING UNIT |
| 201,601: | RADIO RECEPTION UNIT |
| 202, 602: | GI REMOVAL UNIT |
| 203, 603: | SEPARATION UNIT |
| 204, 604: | TRANSMISSION SIGNAL INFORMATION ANALYSIS UNIT |
| 205, 605: | FFT UNIT |
| 206, 402: | INTERFERENCE CANCELLATION UNIT |

| 207, 607: | PROPAGATION CHANNEL ESTIMATION UNIT |
|---|---|
| 208, 608: | PROPAGATION CHANNEL COMPENSATION UNIT |
| 209: | DEMODULATION UNIT |
| 210, 304: | DE-INTERLEAVING UNIT |
| 211,305,401: | HARQ PROCESSING UNIT |
| 212, 306: | SIGNAL DECODING UNIT |
| 213, 307: | RETRANSMISSION CONTROL UNIT |
| 214: | REPLICA SIGNAL GENERATION UNIT |
| 215, 302, 615: | SIGNAL DETECTION UNIT |
| 216, 300, 616: | ITERATIVE DETECTION AND DECODING UNIT |
| 221: | RESPONSE SIGNAL GENERATION UNIT |
| 222: | MODULATION UNIT |
| 223: | IFFT UNIT |
| 224: | GI INSERTION UNIT |
| 225: | RADIO TRANSMISSION UNIT |
| 231, 634: | INTERFERENCE SIGNAL REPLICA GENERATION UNIT |
| 232, 303, | 308, 635: SUBTRACTION UNIT |
| 233, 301, 633: | RECEPTION SIGNAL STORAGE UNIT |
| 241, 311, 411: | PACKET SYNTHESIS UNIT |
| 242, 312, 412: | SYNTHESIS PACKET STORAGE UNIT |
| 251,321: | ERROR CORRECTION DECODING UNIT |
| 252, 322: | ERROR DETECTION UNIT |
| 253: | DE-PUNCTURING UNIT |
| 254: | ERROR CORRECTION DECODING PROCESSING UNIT |
| 261, 309: | INTERLEAVING UNIT |
| 262: | MODULATION UNIT |
| 500-1 to 500-N: | TRANSMISSION PROCESSING UNIT FOR EACH ANTENNAS |
| 600-1 to 600-M: | RECEPTION PROCESSING UNIT FOR EACH ANTENNAS |
| 606: | SIGNAL SEPARATION UNIT |

BEST MODE FOR CARRYING OUT THE INVENTION

[First Embodiment]

In a first embodiment of the present invention, in a communication system including a packet transmission device (first communication device) 1 packeting and transmitting information bits and a packet reception device (communication device, second communication device) 2 receiving the packets transmitted by the packet transmission device 1, and using HARQ, a method of reducing the number of retransmissions and the number of iterations of an iteration process by performing synthesis while repeating signal detection and signal decoding, and by using reliability of a reception signal improved by a retransmission packet when the packet reception device 2 performing the iteration process using an interference canceller receives a retransmission packet will be described.

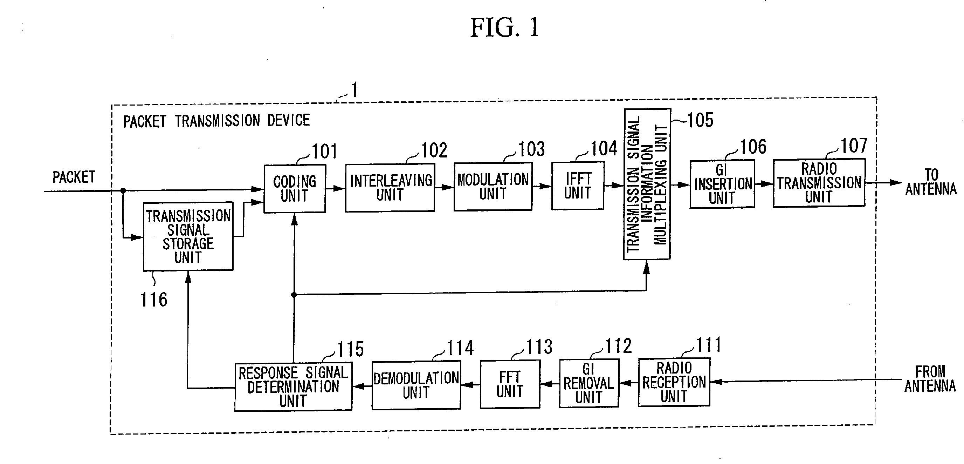

FIG. 1 is a schematic block diagram illustrating the configuration of a packet transmission device 1 according to the first embodiment of the present invention. The packet transmission device 1 includes a coding unit 101, an interleaving unit 102, a modulation unit 103, an inverse fast Fourier transform (IFFT) unit 104, a transmission signal information multiplexing unit 105, a GI insertion unit 106, a radio transmission unit 107, a radio reception unit 111, a GI removal unit 112, an FFT unit 113, a demodulation unit 114, a response signal determination unit 115, and a transmission signal storage unit 116. In this embodiment, the coding unit 101, the interleaving unit 102, the modulation unit 103, the IFFT unit 104, the transmission signal information multiplexing unit 105, the GI insertion unit 106, the radio transmission unit 107, and the transmission signal storage unit 116 serve as a transmission unit.

Information bits (packets) input to the packet transmission device 1 and desired to be transmitted to the packet reception device 2 are input to the coding unit 101 and the transmission signal storage unit 116. Here, the packets consist of a unit information bit stream subjected to error detection coding in the coding unit 101. The transmission signal storage unit 116 stores the input information bits for each packet in order to retransmit previously transmitted information bits when retransmission is requested from the packet reception device 2. The coding unit 101 performs error detection coding on the input information bits for each packet using an error detection code such as cyclic redundancy check (CRC) and then performs error correction coding using a convolutional code, a turbo code, a low density parity check (LDPC) code, or the like to generate coded bits consisting of systematic bits and parity bits. The interleaving unit 102 performs an interleaving process of rearranging the bit order of the coded bits generated by the coding unit 101 in a predetermined order.

The modulation unit 103 modulates the signal subjected to the interleaving process by the interleaving unit 102 in accordance with a modulation scheme, such as quadrature phase shift keying (QPSK) or 16-quadrature amplitude modulation (QAM), and maps the interleaved signal to modulation symbols. The IFFT unit 104 performs frequency-time conversion on the plurality of modulation symbols received from the modulation unit 103 in accordance with IFFT. The transmission signal information multiplexing unit 105 receives transmission signal information, which is information on a transmission signal, such as information indicating whether a transmitted packet is an initial transmission packet or a retransmission packet, from the response signal determination unit 115, and multiplexes the transmission signal information into the output signal of the IFFT unit 104. The transmission signal information may be multiplexed to be separated on the receiver, and for example, time-division multiplexing, frequency-division multiplexing, code-division multiplexing, or the like may be used. The GI insertion unit 106 inserts a GI into the signal into which the transmission signal information has been multiplexed by the transmission signal information multiplexing unit 105. The radio transmission unit 107 performs digital-analog conversion and frequency conversion on the signal into which the GI is inserted by the GI insertion unit 106, and then transmits the resultant signal via an antenna.

The radio reception unit 111 receives the signal including a response signal transmitted by the packet reception device 2 via the antenna and performs frequency conversion and analog-digital conversion. The response signal is used for the packet reception device 2 to notify the packet transmission device 1 of information indicating whether the information bits transmitted from the packet transmission device 1 to the packet reception device 2 are correctly received by the packet reception device 2. For example, the response signal when the information bits have been correctly received is a receipt notification (acknowledgement; ACK), and the response signal when the information bits have not been correctly received is a non-receipt notification (negative acknowledgement; NACK).

The GI removal unit 112 removes the GI from the signal subjected to the analog-digital conversion by the radio reception unit 111. The FFT unit 113 performs time-frequency conversion on the signal from which the GI has been removed by the GI removal unit 112, through the FFT. The demodulation unit 114 demodulates the signal subjected to the time-frequency conversion. The response signal determination unit 115 analyzes the response signal for the demodulated signal to determine whether a response to the information bits transmitted from the packet transmission device 1 to the packet reception device 2 is ACK or NACK.

When it is determined that the response signal is ACK, the retransmission is not performed and the response signal determination unit 115 gives an instruction to clear the information bits stored in the transmission signal storage unit 116. On the other hand, when it is determined that the response signal is NACK, a retransmission instruction is given to the transmission signal storage unit 116 and the coding unit 101, and the transmission signal information multiplexing unit 105 is notified of the retransmission. When receiving the retransmission instruction, the transmission signal storage unit 116 inputs the stored information bits to the coding unit 101 and the coding unit 101 performs error detection coding and error correction coding.

Here, when the retransmission is performed by CC, the coding unit 101 generates the same coded bits as in the initially transmitted packet (referred to as an initial transmission packet) as a retransmission packet. When the retransmission is performed by incremental redundancy (IR), the coding unit 101 generates coded bits including parity bits different from those of the initial transmission packet by performing a puncturing process of thinning out some of the coded bits subjected to error correction coding when transmitting the initial transmission packet and by performing a puncturing process of thinning out bits different from those of the initial transmission packet when transmitting the retransmission packet. The puncturing process will be described in detail below.

The above-described processes are then performed by the interleaving unit 102, the modulation unit 103, the IFFT unit 104, the transmission signal information multiplexing unit 105, the GI insertion unit 106, and the radio transmission unit 107 to retransmit the packets to the radio reception device 2. However, the transmission signal information multiplexing unit 105 multiplexes information indicating the retransmission, since the response signal determination unit 115 notifies the transmission signal information multiplexing unit 105 of the retransmission.

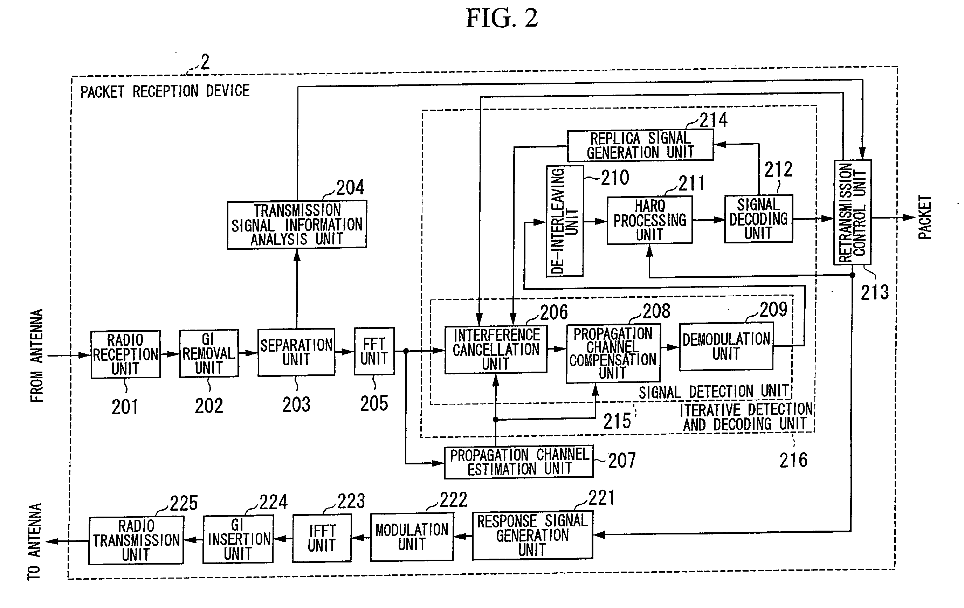

FIG. 2 is a schematic block diagram illustrating the configuration of the packet reception device 2 according to the present embodiment. The radio reception device 2 includes a radio reception unit 201, a GI removal unit 202, a separation unit 203, a transmission signal information analysis unit 204, an FFT unit 205, an interference cancellation unit (a soft cancellation unit or an interference removal unit) 206, a propagation channel estimation unit 207, a propagation channel compensation unit (an MMSE filter unit) 208, a demodulation unit 209, a de-interleaving unit 210, an HARQ processing unit 211, a signal decoding unit 212, a replica signal generation unit (a soft replica generation unit) 214, a retransmission control unit 213, a response signal generation unit 221, a modulation unit 222, an IFFT unit 223, a GI insertion unit 224, and a radio transmission unit 225. The interference cancellation unit 206, the propagation channel compensation unit 208, and the demodulation unit 209 serve as a signal detection unit 215 for performing signal detection and obtaining a coded bit LLR. In addition, the signal detection unit 215, the de-interleaving unit 210, HARQ processing unit 211, the signal decoding unit 212, and the replica signal generation unit 214 serve as an iterative detection and decoding unit 216 for performing an iteration process of repeating the signal detection performed by the signal detection unit 215 and the signal decoding performed by the signal decoding unit 212.

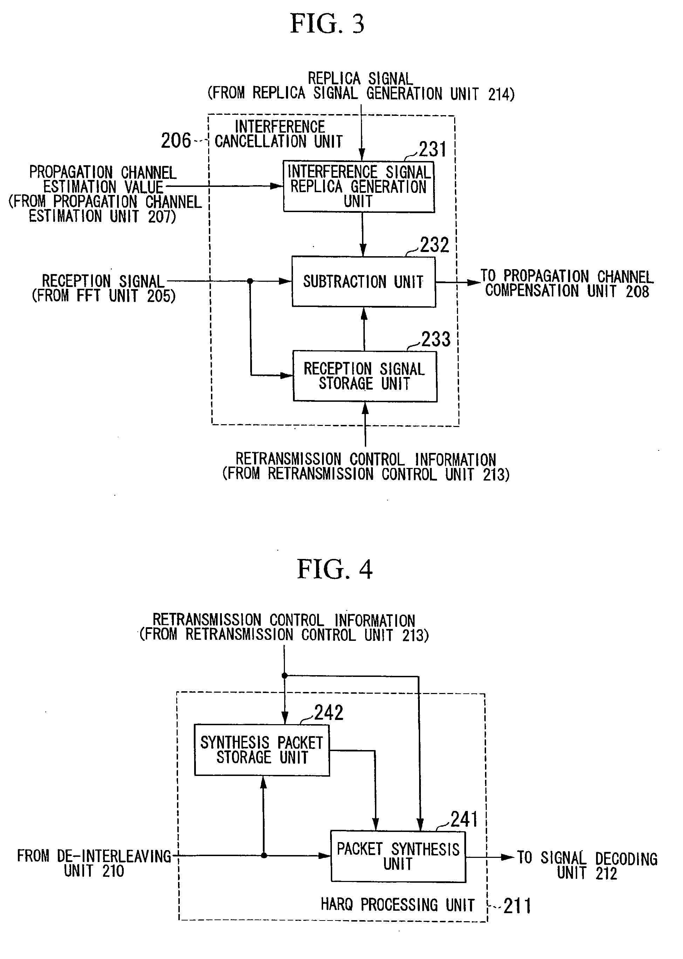

FIG. 3 is a schematic block diagram illustrating the configuration of the interference cancellation unit 206 according to the present embodiment. The interference cancellation unit 206 includes an interference signal replica generation unit 231, a subtraction unit 232, and a reception signal storage unit 233.

FIG. 4 is a schematic block diagram illustrating the configuration of HARQ processing unit 211 according to the present embodiment. HARQ processing unit 211 includes a packet synthesis unit (synthesis unit) 241 and a synthesis packet storage unit (synthesis signal storage unit) 242.

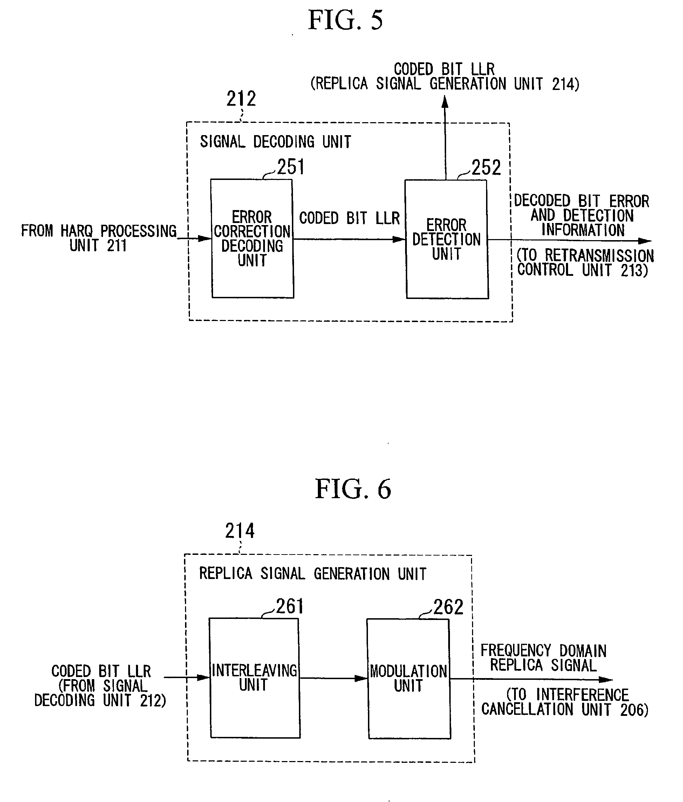

FIG. 5 is a schematic block diagram illustrating the configuration of the signal decoding unit 212 according to the present embodiment. The signal decoding unit 212 includes an error correction decoding unit 251 and an error detection unit 252.

FIG. 6 is a schematic block diagram illustrating the configuration of the replica signal generation unit 214 according to this embodiment. The replica signal generation unit 214 includes an interleaving unit 261 and a modulation unit 262.

Hereinafter, the operation of the packet reception device 2 when the packet reception device 2 receives an initial transmission packet signal will be first described. The radio reception unit 201 (FIG. 2) performs frequency conversion, analog-digital conversion, and the like on the initial transmission packet signal received via the antenna, and then outputs the resultant signal. The GI removal unit 202 removes the GI from the signal output by the radio reception unit 201. The separation unit 203 separates the signal, from which the GI has been removed by the GI removal unit 202, into the transmission signal information multiplexed in the signal and a remaining signal other than the transmission signal information. The transmission signal information analysis unit 204 analyzes the separated transmission signal information to determine whether the received signal is an initial transmission packet signal or a retransmission packet signal, and then outputs the determination result to the retransmission control unit 213. The FFT unit 205 performs time-frequency conversion on the remaining signal other than the transmission signal information separated by the separation unit 203 to generate a frequency-domain signal, and then outputs the frequency-domain signal.

The frequency-domain signal output by the FFT unit 205 is input to the interference cancellation unit 206. In an initial iteration process (which will be described below), the interference cancellation unit 206 outputs the input frequency-domain signal without change, since a replica signal is not generated. However, the reception signal storage unit 233 of the interference cancellation unit 206 shown in FIG. 3 stores the frequency-domain signal input to the interference cancellation unit 206. When the retransmission packet is received, the signal stored in the reception signal storage unit 233 is synthesized with the reception result of the retransmission packet and is used as a signal to perform the iteration process on the initial transmission packet signal again. The operation when the retransmission packet signal is received will be described in detail below.

Referring back to FIG. 2, the propagation channel estimation unit 207 performs propagation channel estimation using the signal output by the FFT unit 205 to obtain a propagation channel estimation value, and then inputs the propagation channel estimation value to the interference cancellation unit 206 and the propagation channel compensation unit 208. The propagation channel estimation unit 207 stores the propagation channel estimation value calculated for each packet signal, until the packet reception device 2 can correctly receive the information bits transmitted by the packet transmission device 1 (until no error is detected). In this embodiment, the propagation channel estimation unit 207 obtains the propagation channel estimation value based on the frequency-domain signal output by the FFT unit 205, but the present invention is not limited thereto and the propagation channel estimation value may be obtained based on the time-domain signal which is not yet input to the FFT unit 205. An example of the propagation channel estimation method performed by the propagation channel estimation unit 207 includes a method of using a pilot signal including information known between the packet transmission device 1 and the packet reception device 2. However, other methods may be used.

The signal output by the interference cancellation unit 206 is input to the propagation channel compensation unit 208. Based on the propagation channel estimation value estimated by the propagation channel estimation unit 207, the propagation channel compensation unit 208 performs propagation channel compensation on the signal output by the interference cancellation unit 206 using a weight coefficient that has used a zero forcing (ZF) criterion, a minimum mean square error (MMSE) criterion, or the like, and then outputs the resultant signal as a signal detection result. The demodulation unit 209 demodulates the signal subjected to the propagation channel compensation to obtain a coded bit log likelihood ratio (LLR). LLR refers to a value representing a probability of 1 or 0 for each bit as a log likelihood ratio. Hereinafter, for example, the LLR of bit a is expressed as $\lambda(a)$.

Here, the process of the demodulation unit 209 will be described. The case where the modulation scheme in the modulation unit 103 of the packet transmission device 1 is QPSK modulation will be described herein. In the description, it is assumed that a QPSK symbol, which is the modulation result of the modulation unit 103 of the transmitter, that is, the packet transmission device 1, is X and a symbol input to the demodulation unit 209 of the packet reception device 2 is Xc. When bits constituting X are $b_0$, $b_1$ (where $b_0$ and $b_1 = \pm 1$), X can be expressed by Equation (1). In this equation, j denotes an imaginary unit. LLR $\lambda(b_0)$ and $\lambda(b_1)$ of the bits $b_0$, $b_1$ are calculated by Equation (2) from the estimation value Xc in the receiver of X.

$$X = \frac{1}{\sqrt{2}}(b_0 + jb_1)$$

$$\cdots (1)$$

$$\lambda(b_0) = \frac{2\operatorname{Re}(X_c)}{\sqrt{2}(1 - \mu)}$$

$$\cdots (2)$$

In the equation, Re( ) denotes the real part of the complex number. $\mu$ denotes the equivalent amplitude after the propagation channel compensation. For example, on the assumption that the propagation channel estimation value in a k-th sub-carrier is H(k) and the propagation channel compensation weight of the multiplication MMSE criterion is W (k), $\mu$ is W(k).H(k). In addition, $\lambda(b_1)$ may be obtained by exchanging the real part and the imaginary part of $\lambda(b_0)$.

The de-interleaving unit 210 performs a de-interleaving process, which is the reverse of the bit rearrangement by the interleaving unit 102 of the packet transmission device 1, on the coded bit LLR output by the demodulation unit 209. The de-interleaved coded bit LLR is input to HARQ processing unit 211. However, when the transmission signal information analysis unit 204 analyzes the transmission signal information and determines that the signal is the initial transmission signal, HARQ processing unit 211 receives the determination result via the retransmission control unit 213 and outputs the input coded bit LLR without change. In this case, the synthesis packet storage unit 242 of HARQ processing unit 211 in FIG. 4 stores the input coded bit LLR (the result obtained after demodulating the initial transmission packet) in order to synthesize the coded bit LLR and the retransmission packet signal by HARQ.

Referring back to FIG. 2, the output signal of HARQ processing unit 211 is input to the signal decoding unit 212. In the signal decoding unit 212, an error correction decoding unit 251 shown in FIG. 5 performs an error correction decoding process on the input signal and outputs the coded bit LLR. Here, the coded bit LLR refers to the LLR of systematic bits and parity bits. The error detection unit 252 performs an error detection process by generating decoded bits by performing a hard decision process on the information bits in the systematic bits of the coded bit LLR output by the error decoding unit 251 and calculating a CRC for the packet consisting of the information bits, to generate error detection information indicating whether there is an error. In addition, based on the generated error detection information and the iteration number, the error detection unit 252 determines whether the iteration process is to be continuously performed or to be terminated. That is, when no error has been detected, the error detection unit 252 terminates the iteration process and outputs the decoded bits and the error detection information to the retransmission control unit 213. When the error detection information received from the error detection unit 252 is information indicating that there is no error, the retransmission control unit 213 outputs a packet consisting of the input decoded bits and also outputs the error detection information to the response signal generation unit 221.

On the other hand, when an error is detected, the error detection unit 252 performs the following determination process. When the number of iterations of the iteration process does not reach a preset maximum iteration number, the error detection unit 252 continues the iteration process and outputs the coded bit LLR received from the error correction decoding unit 251 to the replica signal generation unit 214. When the number of iterations of the iteration process reaches the reset maximum iteration number, the error detection unit 252 terminates the iteration process and outputs the error detection information indicating that there is an error to the retransmission control unit 213 in FIG. 2. When the retransmission control unit 213 receives the error detection information, the retransmission control unit 213 outputs error detection information to the response signal generation unit 221 to request the packet transmission device 1 to retransmit the packet. While the method of using CRC has been described as the error detection method, other methods may be used. While reference to the preset maximum iteration number to determine whether the iteration process is to be continuously performed or to be terminated has been described, the present invention is not limited thereto. For example, the determination may be made based on the likelihood of the input coded bit LLR.

Next, the iteration process performed on the initial transmission packet by the iterative detection and decoding unit 216 will be described. When the initial transmission packet signal is processed as described above and the error detection unit 252 of the signal decoding unit 212 determines that the iteration process is to be continuously performed, the replica signal generation unit 214 performs the following process in order to receive the coded bit LLR of the initial transmission packet from the signal decoding unit 212 and generate a replica initial transmission packet signal in a frequency domain from the coded bit LLR. The interleaving unit 261 of the replica signal generation unit 214 in FIG. 6 performs an interleaving process of rearranging the bit order of the input coded bit LLR in an interleaving pattern for the initial transmission packet.

The modulation unit 262 performs a modulation process on the coded bit LLR subjected to the interleaving process using the demodulation scheme for the initial transmission packet to generate a frequency-domain replica signal. Here, a modulation process using a QPSK modulation scheme in the modulation unit 262 will be described. On the assumption that the LLRs of the bits $b_0$, $b_1$ constituting a QPSK modulation symbol are $\lambda(b_0)$ and $\lambda(b_1)$, the replica signal of the QPSK modulation symbol is given in Equation (3). Here, j denotes an imaginary unit.

$$\frac{1}{\sqrt{2}}\tanh(\lambda(b_0)/2) + \frac{j}{\sqrt{2}}\tanh(\lambda(b_1)/2) \qquad \cdots\ (3)$$

Referring back to FIG. 2, the replica initial transmission packet signal generated by the replica signal generation unit 214 is input to the interference cancellation unit 206. The interference signal replica generation unit 231 of the interference cancellation unit 206 shown in FIG. 3 generates a frequency-domain signal of an interference signal replica, which is a replica of an interference component for each desired signal, from the input replica signal and the propagation channel estimation value output by the propagation channel estimation unit 207. That is, the interference signal replica generation unit 231 generates the interference signal replica by the signal in the initial transmission packet by multiplying a modulation symbol string other than the initial transmission packet for each signal of the modulation symbol of the initial transmission packet, which is a desired signal, by a part of the propagation channel estimation value.

The interference signal replica generated by the interference signal replica generation unit 231 is generated based on the replica initial transmission packet signal as described above. However, when a signal other than the initial transmission packet is multiplexed in the reception signal, the interference signal replica may be generated based on a replica signal of the multiplexed signal. The replica signal of the multiplexed signal can be generated by separating the signal from the reception signal and then modulating the result obtained through the propagation channel compensation process, the demodulation process, and the error correction decoding process in parallel to the initial transmission packet or prior to the initial transmission packet, as in the generation of the replica initial transmission packet signal.

The replica of the interference component such as ISI, ICI, or MCI can be used as the interference signal replica according to this embodiment, but the present invention is not limited thereto. When the interference component of MCI is used as the interference signal replica, the packet transmission device 1 includes a spreading unit for performing code multiplexing on the transmission signal and the packet reception device 2 includes a de-spreading unit for separating the signal subjected to code multiplexing. The subtraction unit 232 subtracts the interference signal replica generated by the interference signal replica generation unit 231 from the initial transmission packet signal stored in the reception signal storage unit 233, and outputs the resultant signal to the propagation channel compensation unit 208.

For example, when it is assumed that the replica initial transmission packet signal consists of replica signals $S_1$ to $S_4$ of four modulation symbols for simplification, the interference replicas for the first to fourth modulation symbols are $I_1$ to $I_4$, and the initial transmission packet signal is vector R and the subtraction unit 232 outputs $R-I_1$, $R-I_2$, $R-I_3$, and $R-I_4$ obtained by subtracting the interference signal replicas from the initial transmission packet signal. Thereafter, the same processes as those in the description of the initial iteration process and the iteration process for the initial transmission packet are repeated until the error detection unit 252 of the signal decoding unit 212 determines the termination of the iteration process.

When the error detection unit 252 of the signal decoding unit 212 determines the termination of the iteration process as the result of the iteration process for the initial transmission packet, the retransmission control unit 213 outputs the error detection information received from the error detection unit 252 to the response signal generation unit 221. Based on the error detection information received from the retransmission control unit 213, the response signal generation unit 221 generate a response signal ACK when the error detection information indicates that there is no error and a response signal NACK when the error detection information indicates that there is an error. The modulation unit 222 performs modulation, such as QPSK or 16QAM, on the response signal generated by the response signal generation unit 221 and maps a resultant response signal to the modulation symbols. The IFFT unit 223 performs frequency-time conversion on the modulation symbols, for example, through IFFT. The GI insertion unit 224 inserts a GI into the signal subjected to the frequency-time conversion. The radio transmission unit 225 performs digital-analog conversion, frequency conversion, and the like on the signal into which the GI has been inserted, and outputs the resultant signal via the antenna.

Next, the operation when the packet reception device 2 receives the retransmission packet signal will be described. The radio reception unit 201, the GI removal unit 202, and the separation unit 203 perform the processes on the retransmission packet signal, as in the initial transmission packet signal reception. The transmission signal information analysis unit 204 analyzes the transmission signal information separated by the separation unit 203, determines that the received signal is the retransmission packet signal, and outputs the determination result to the retransmission control unit 213. Upon receipt of the determination result, the retransmission control unit 213 generates retransmission control information for instructing to process the received signal as the retransmission packet, and outputs the retransmission control information to the interference cancellation unit 206, the replica signal generation unit 214, and HARQ processing unit 211. For example, the retransmission control information includes signal information such as the coding rate of the initial transmission packet and the retransmission packet or a puncture pattern designating bits to be thinned out in the puncturing process, control information for performing HARQ synthesis, and so on.

The FFT unit 205 performs time-frequency conversion on the remaining signal other than the transmission signal information separated by the separation unit 203 to generate a frequency-domain signal, and outputs the frequency-domain signal to the propagation channel estimation unit 207 and the interference cancellation unit 206. The propagation channel estimation unit 207 performs propagation channel estimation using the frequency-domain signal, and outputs a propagation channel estimation value to the interference cancellation unit 206 and the propagation channel compensation unit 208. Even in an initial iteration process for the retransmission packet, the interference cancellation unit 206 outputs the frequency-domain signal input from the FFT unit 205 without change, as in the initial process for the initial transmission packet. However, the reception signal storage unit 233 does not store the input signal. The propagation channel compensation unit 208 performs propagation channel compensation on the frequency-domain signal output by the interference cancellation unit 206 using a weight coefficient that has used a ZF criterion, an MMSE criterion, or the like based on the propagation channel estimation value estimated by the propagation channel estimation unit 207. The demodulation unit 209 demodulates the signal subjected to the propagation channel compensation to calculate the coded bit LLR. The de-interleaving unit 210 performs a de-interleaving process on the coded bit LLR calculated by the demodulation unit 209 and inputs the resultant coded bit LLR to HARQ processing unit 211.

The coded bit LLR of the retransmission packet from the de-interleaving unit 210 and the retransmission control information output by the retransmission control unit 213 are input to HARQ processing unit 211. The synthesis packet storage unit 242 of HARQ processing unit 211 in FIG. 4 outputs the stored coded bit LLR, which is obtained through the initial process for the initial transmission packet, to the packet synthesis unit 241 based on the retransmission control information. The packet synthesis unit 241 synthesizes the coded bit LLR of the retransmission packet input from the de-interleaving unit 210 and the coded bit LLR obtained in the initial process for the initial transmission packet input from the synthesis packet storage unit 242 based on the retransmission control information, and outputs the synthesis result to the signal decoding unit 212.

Here, the synthesis in the packet synthesis unit 241 may be performed by adding corresponding bits of two coded bit LLRs, for example, when HARQ is retransmission by CC. In the case of retransmission by IR, the synthesis may be performed by performing the de-puncturing process on the coded bit LLR of each packet and adding corresponding bits of the two coded bit LLRs subjected to the de-puncturing process. Here, the de-puncturing process is a process of inserting a defined value into the bit thinned by the puncturing process at the transmission. The de-puncturing process will be described in detail below. While the synthesis is performed by adding the corresponding bits of the two coded bit LLRs, the coded bit LLRs may be weighted and then added, as well as the corresponding bits simply being added.

The error correction decoding unit 251 of the signal decoding unit 212 in FIG. 5 performs an error correction decoding process on the coded bit LLR input to the signal decoding unit 212 and outputs an error-corrected coding unit LLR. The error detection unit 252 performs a hard decision process on the information bits of the coded bit LLR received from the error correction decoding unit 251 to generate decoded bits, and performs an error detection process on the packet consisting of the decoded bits to generate error detection information. The error detection unit 252 determines whether to continuously perform or terminate the iteration process based on, for example, the generated error detection information and the number of iterations of the iteration process.

When no error has been detected, the error detection unit 252 terminates the iteration process and outputs the decoded bits and the error detection information to the retransmission control unit 213 in FIG. 2. The retransmission control unit 213 outputs a packet consisting of the input decoded bits and also outputs the error detection information to the response signal generation unit 221, when the error detection information received from the error detection unit 252 indicates that there is no error.

On the other hand, when an error has been detected, the error detection unit 252 performs the following determination. When the number of iterations of the iteration process does not reach a preset maximum iteration number, the error detection unit 252 continuously performs the iteration process and outputs the coded bit LLR received from the error correction decoding unit 251 to the replica signal generation unit 214. When the number of iterations of the iteration process reaches the reset maximum iteration number, the error detection unit 252 terminates the iteration process and outputs the error detection information indicating that there is an error to the retransmission control unit 213 in FIG. 2. Upon receipt of the error detection information, the retransmission control unit 213 outputs the error detection information to the response signal generation unit 221 to request the packet transmission device 1 to retransmit the packet.

Hereinafter, the iteration process when the retransmission packet is received, the iteration process is performed initially, and the error detection unit 252 detects an error in the result obtained by performing the error decoding process on the coded bit LLR in which the demodulation result for the initial transmission packet and the demodulation result for the retransmission packet are synthesized will be described. The replica signal generation unit 214 performs the following process to generate the replica signal from the coded bit LLR output by the error detection unit 252 (FIG. 5) of the signal decoding unit 212. The interleaving unit 261 of the replica signal generation unit 214 shown in FIG. 6 performs the interleaving process of rearranging the bit order in an interleaving pattern of the initial transmission packet on the input coded bit LLR input from the error detection unit 252 of the signal decoding unit 212. The modulation unit 262 performs the modulation process on the coded bit LLR subjected to the interleaving process in accordance with the modulation method of the initial transmission packet to generate the frequency-domain replica initial transmission packet signal. The generated replica initial transmission packet signal is input to the interference cancellation unit 206.

The interference signal replica generation unit 231 of the interference cancellation unit 206 shown in FIG. 3 generates the interference signal replica for the initial transmission packet from the replica initial transmission packet signal from the replica signal generation unit 214 and the propagation channel estimation value from the propagation channel estimation unit 207. Based on the retransmission control information output by the retransmission control unit 213, the reception signal storage unit 233 outputs the initial transmission packet signal stored in the reception signal storage unit 233 to the subtraction unit 232. The subtraction unit 232 subtracts the interference signal replica generated by the interference signal replica generation unit 231 from the initial transmission packet signal received from the reception signal storage unit 233, and then outputs the result to the propagation channel compensation unit 208.

The propagation channel compensation unit 208, the demodulation unit 209, and the de-interleaving unit 210 perform the above-described same processes when the initial transmission packet signal is received. HARQ processing unit 211 performs the above-described same process as the initial iteration process when the retransmission packet signal is received in order to synthesize the packets even in the iteration process. That is, based on the retransmission control information, the synthesis packet storage unit 242 shown in FIG. 4 outputs the coded bit LLR obtained in the initial process for the stored initial transmission packet to the packet synthesis unit 241. The packet synthesis unit 241 synthesizes the coded bit LLR from the de-interleaving unit 210 and the coded bit LLR obtained in the initial process for the initial transmission packet from the synthesis packet storage unit 242 based on the retransmission control information, and then outputs the result to the signal decoding unit 212. The signal decoding unit 212 also performs the above-described same processes to perform the iteration process until the error detection unit 252 shown in FIG. 5 determines that the iteration process has ended.

The error detection unit 252 outputs the error detection information indicating the error detection result to the response signal generation unit 221 shown in FIG. 2, when the error detection unit 252 determines that the iteration process has ended. The response signal generation unit 221 generates the response signal ACK or NACK based on the error detection information output from the retransmission control unit 213. The modulation unit 222 maps the response signals generated by the response signal generation unit 221 to the modulation symbols in accordance with QPSK or 16QAM. The IFFT unit 223 performs the frequency-time conversion process on the modulation symbols in accordance with IFFT or the like. The GI insertion unit 224 inserts the GI into the signal subjected to the frequency-time conversion process. The radio transmission unit 225 performs the digital-analog conversion process, the frequency conversion process, and the like on the signal into which the GI is inserted, and then outputs the signal via the antenna. The reception of the retransmission packet, the iteration process, and the transmission of NACK are repeated until the error detection unit 252 detects no error or determines that the retransmission process has ended.

In the communication system using HARQ, when the packet reception device 2 performing the iteration process using the interference canceller receives the retransmission packet, the packet synthesis unit 241 synthesizes the signal based on the retransmission packet and the signal based on the initial transmission packet in the iteration process. In this way, by utilizing the reliability of the reception signal improved by the retransmission packet, the number of retransmissions of HARQ and the number of iterations of the interference canceller can be reduced.

In the above description, when receiving the retransmission packet, the synthesis packet storage unit 242 stores the retransmission packet, and the signal that the packet synthesis unit 241 of HARQ processing unit 211 synthesizes with the signal from the de-interleaving unit 210 is the coded bit LLR obtained in the initial process for the initial transmission packet. However, the present invention is not limited thereto and the signal may be a signal based on either the initial transmission packet or the retransmission packet received before the retransmission packet. For example, the coded bit LLR obtained at the last iteration process for the initial transmission packet may be used. One of the coded bit LLRs obtained in the respective iteration processes may be used. For example, the synthesis packet storage unit 242 may store one bit LLR in each iteration process among the coded bit LLRs obtained in the respective iteration processes and may use the coded bit LLR. Alternatively, the synthesis packet storage unit 242 may store all the coded bit LLRs obtained in the respective iteration processes on the initial transmission packet, and may select and use the coded bit LLR with the highest likelihood among the coded bit LLRs. Alternatively, a different coded bit LLR may be selected and used in each iteration process.

In the above description, the packet reception device 2 receives the initial transmission packet and requests the packet transmission device to retransmit the packet based on NACK. When the packet reception device 2 receives the retransmission packet, the two packets are synthesized. However, the present invention is not limited thereto. For example, when at least two retransmission packets are received, the results obtained by demodulating all of the received packets may be synthesized. Alternatively, the results obtained by demodulating two or more packets among all of the received packets may be synthesized.

In the above description, as the reception signal for performing the interference cancellation, the retransmission packet signal is used in the initial iteration process and the initial transmission packet signal stored in the reception signal storage unit 233 is used in the second or later iteration process when an error is detected in the result of the error-correction-decoding on the coded bit LLR obtained by synthesizing the demodulation result for the initial transmission packet and the demodulation result for the retransmission packet after the retransmission packet is received. However, the present invention is not limited thereto. The reception signal storage unit 233 may also store the retransmission packet signal and the retransmission packet signal or the initial transmission packet previously received and stored in the reception signal storage unit 233 may be used. Alternatively, the signal of the presently received retransmission packet may be used. Alternatively, the interference cancellation process, that is, the signal detection process for one signal may be performed in each iteration process.

In the above description, the multi-carrier signal is used as the signal received and transmitted between the packet transmission device 1 and the packet reception device 2. However, a single carrier signal may be used. In the above description, the packet transmission device 1 includes the interleaving unit 102 and the packet reception device 2 includes the interleaving unit 261 and the de-interleaving unit 210. However, the interleaving unit and the de-interleaving unit may not be included. In the above description, the packet reception device 2 performs the iteration process using the interference canceller (the interference cancellation unit 206) of the frequency domain. However, the iteration process may be performed using an interference canceller of a time domain.

The configuration of the packet reception device 2 according to this embodiment is applicable to a packet reception device using a frequency-domain soft canceller followed by minimum mean squared error filter (SC/MMSE)-type turbo equalization or time-domain SC/MMSE-type turbo equalization. The configuration is applicable to a packet reception device performing stream separation when transmitting multi-input multi-output (MIMO). When the stream separation is performed when transmitting MIMO, the packet reception device includes a stream separation unit separating a plurality of spatially multiplexed streams.

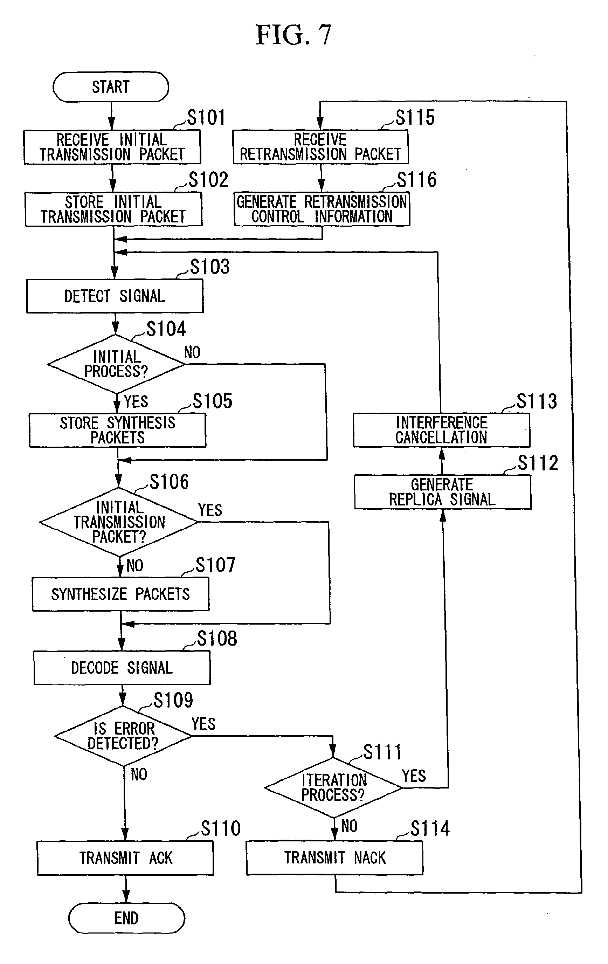

FIG. 7 is a flowchart illustrating the operation of the packet reception device 2 according to the present embodiment. In step S101, the radio reception unit 201 of the packet reception device 2 receives the initial transmission packet. In step S102, the reception signal storage unit 233 of the packet reception device 2 stores the initial transmission packet signal, for the interference cancellation process described below. In step S103, when the packet is the initial transmission packet and the process is an initial process, the propagation channel compensation unit 208 performs propagation channel compensation based on the propagation channel estimation value estimated by the propagation channel estimation unit 207 from the initial transmission packet received in step S101 and the demodulation unit 209 performs demodulation to detect the signal. In step S104, HARQ processing unit 211 determines whether the process is the initial process in the iteration process. When it is determined in step S104 that the process is not the initial process, step S105 is skipped and the process proceeds to step S106. When it is determined in step S104 that the iteration process is the initial process, the synthesis packet storage unit 242 stores the coded bit LLR of the packet, for HARQ synthesis described below, in step S105.

In step S106, HARQ processing unit 211 determines whether the packet is the initial transmission packet. When it is determined in step S106 that the packet is the initial transmission packet, step S107 is skipped and the process proceeds to step S108. When it is determined in step S106 that the packet is not the initial transmission packet, the packet synthesis unit 241 performs HARQ synthesis on the coded bit LLR stored in step S105 and the coded bit LLR of the packet in step S107. In step S108, the error correction decoding unit 251 performs error correction decoding. In step S109, the error detection unit 252 detects whether there is an error in the packet. When an error is detected, the process proceeds to step S111, in which the error detection unit 252 determines whether the iteration process is to be performed on the packet.

When it is determined in step S111 that the iteration process is to be performed, the replica signal generation unit 214 generates the replica initial transmission packet signal from the coded bit LLR obtained in step S108, for an interference cancellation process described below, in step S112. In step S113, the interference signal replica generation unit 231 generates an interference replica signal from the replica signal generated in step S112 for cancellation of the interference component from the initial transmission packet stored in step S102, and the subtraction unit 232 performs the interference cancellation in step S113. The process then proceeds to step S103. When the process is the iteration process in step S103, the signal detection for the initial transmission packet subjected to the interference cancellation in step S113 is performed, as in step S113 described above. Then, the iteration process is repeated until it is determined in step S111 that the iteration process has ended.

When it is determined in step S111 that the iteration process has ended, NACK generated by the response signal generation unit 221 is transmitted to the packet transmission device 1 to request retransmission, in step S114. In step S115, the radio reception unit 201 receives the retransmission packet. In step S116, the retransmission control unit 213 generates the retransmission control information for performing retransmission packet processing based on the transmission signal information separated from the reception signal by the separation unit 203. In step S103, when the packet is the retransmission packet and the process is the initial process, signal detection for the retransmission packet received in step S115 is performed, as in step S113 described above. The process is then repeated until an error is not detected in step S109. When an error is not detected in step S109, ACK generated by the response signal generation unit 221 is transmitted to the packet transmission device 1 in step S110, and the process has ended.

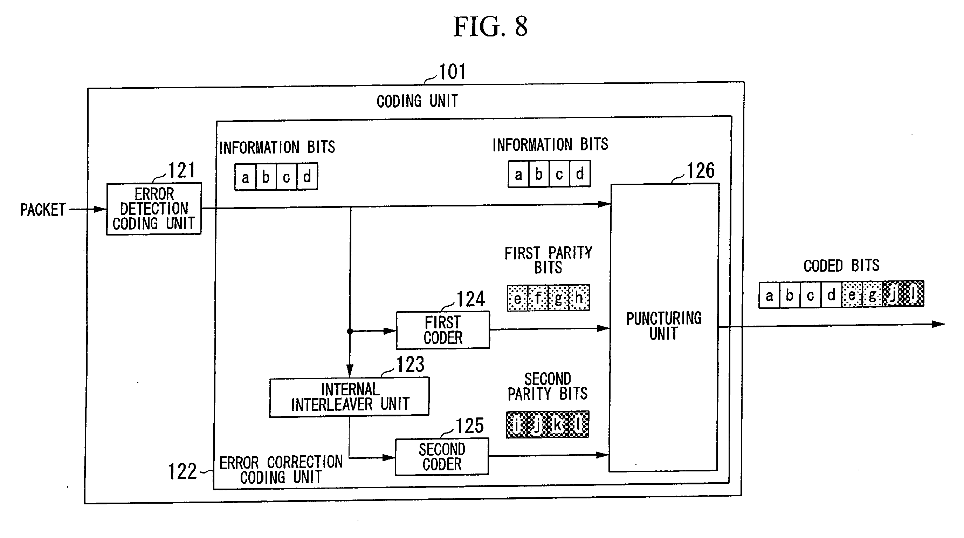

The error correction coding process performed by the coding unit 101 and the decoding process performed by the error correction decoding unit 251 of the signal decoding unit 212 will be described. FIG. 8 is a schematic block diagram illustrating the configuration of the coding unit 101 of the packet transmission device 1. The coding unit 101 includes an error detection coding unit 121 and an error correction coding unit 122. The error detection coding unit 121 calculates CRC for the input packet and outputs the bits of CRC calculated using the input packet as the information bits. The error correction coding unit 122 receives the information bits and performs error correction coding to generate coded bits.

In FIG. 8, the case where a turbo code is used as an example of the error correction coding process in the error correction coding unit 122 is shown. The error correction coding unit 122 includes an internal interleaver unit 123, a first coder 124, a second coder 125, and a puncturing unit 126. For example, when information bits (including a redundant bit by the error correction code) to be transmitted, which are input to the error correction coding unit 122, are four information bits a to d, the first coder 124 generates first parity bits (e to h) converted from the information bits a to d and the second coder 125, to which the result of rearranging a bit sequence of the information bits a to d in the internal interleaver unit 123 is input, and generates second parity bits (i to 1) converted from the input.

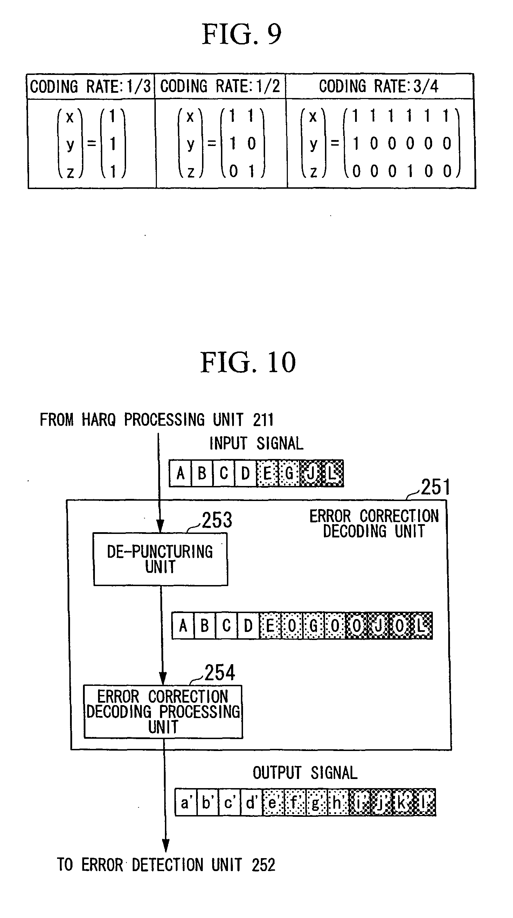

The puncturing unit 126 performs a puncturing process on the bit sequence obtained by connecting the information bits, the first parity bits, and the second parity bits. That is, the puncturing unit 126 performs the puncturing process to thin out some of the information bits and the parity bits obtained in the coding process and to change the coding rate. A pattern shown in FIG. 9 may be used as the puncture pattern used in the puncturing process. For example, FIG. 9 shows puncture patterns with coding rates of 1/3, 1/2, and 3/4. In FIG. 9, x, y, and z indicate the information bit, the first parity bit, and the second parity bit, respectively, and 1 or 0 indicate bits (remaining bits) to be transmitted and bits (thinned bits) not to be transmitted.

For example, since x, y, and z in the puncture pattern with the coding rate of 1/3 are all 1, the puncturing unit 126 outputs all of the information bits, first puncture bits, and second puncture bits. In the puncture pattern with the coding rate of 1/2, since x is "11," the puncturing unit 126 outputs all of the information bits. Since y is "10" and the second bit is "0," the puncturing unit 126 thins out the even bits corresponding to "0" in the first puncture bits and outputs the remaining bits. Since z is "01" and the first bit is "0," the puncturing unit 126 thins out the odd bits corresponding to "0" in the second puncture bits and outputs the remaining bits.

In the puncture pattern with the coding rate of 3/4, since x is "111111," the puncturing unit 126 outputs all of the information bits. Since y is "100000" and only the first bit of the six bits is "1," the puncturing unit 126 outputs only the first bit of every six bits in the first puncture bits. Since z is "000100" and only the fourth bit of the six bits is "1," the puncturing unit 126 outputs only the fourth bit of every six bits in the second puncture bits. Since in the example in FIG. 8, the bits obtained by connecting the information bits a to d, the first parity bits e to h, and the second parity bits i to 1 are subjected to the puncturing process to thin out four bits (f, h, i, and k) and obtain 8 coded bits a, b, c, d, e, g, j, and l, the example in FIG. 8 corresponds to the example in FIG. 9 in which the coding rate is 1/2.

FIG. 10 is a schematic block diagram illustrating the configuration of the error correction decoding unit 251 when CC is used in HARQ. The error correction decoding unit 251 includes a de-puncturing unit 253 and an error correction decoding processing unit 254. Here, the decoding process when the turbo code is used as the error correction code is shown. The coded bit LLR output by HARQ processing unit 211 is assumed to be A, B, C, D, E, G, J, and L. First, the de-puncturing unit 253 performs a de-puncturing process. That is, the de-puncturing unit 253 inserts an initial value (virtual value) into a bit position at which the bit is thinned out by the puncturing process to form the number of bits before the puncturing process. For example, zero may be used as the initial value. The error correction decoding processing unit 254 performs an error correction decoding process on the de-punctured bits to generate the coded bit LLR for the information bits, the first parity bits, and the second parity bits, and outputs the coded bit LLR.

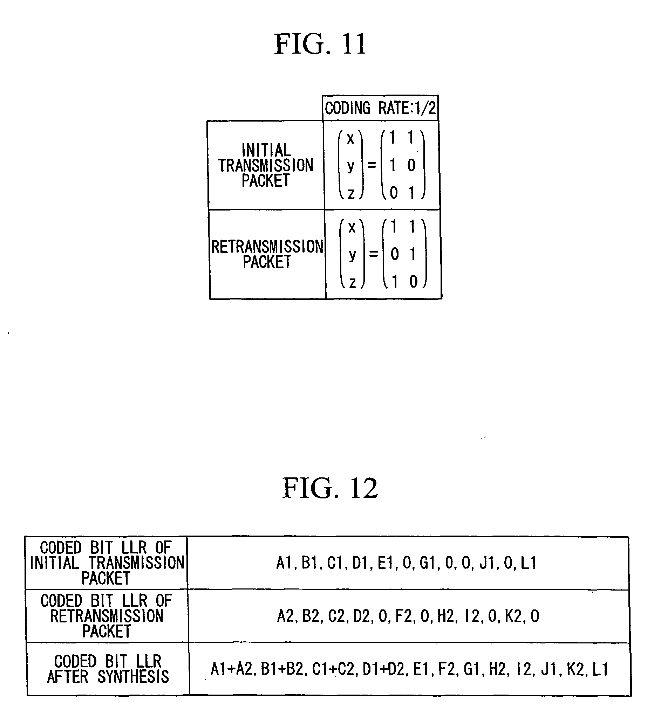

When IR is used in HARQ, it is necessary for the above-described de-puncturing unit 253 to perform the de-puncturing process on each coded bit LLR as a synthesis target before the packet synthesis process is performed by the packet synthesis unit 411. Here, the case where the coded bit LLRs of the initial transmission packet and the retransmission packet are synthesized will be described. FIG. 11 is a diagram illustrating an example of the puncture pattern used in this case. In the example of the puncture pattern in FIG. 11, in the initial transmission packet, the information bits are not thinned out, the even bits of the first parity bits are thinned out, and the odd bits of the second parity bits are thinned out. In the retransmission packet, the information bits are not thinned out, the odd bits of the first parity bits are thinned out, and the even bits of the second parity bits are thinned out in the initial transmission packet.

FIG. 12 is a diagram illustrating an example of the synthesis in the packet synthesis unit 411 when the puncture pattern in FIG. 11 is used. Here, it is assumed that the coded bit LLRs (A1, B1, C1, D1, E1, G1, J1, and L1) of the initial transmission packet from the synthesis packet storage unit 242 and the coded bit LLRs (A2, B2, C2, D2, F2, H2, 12, and K2) of the retransmission packet from the de-interleaving unit 210 are input to the packet synthesis unit 411. The packet synthesis unit 241 performs the de-puncturing process on the coded bit LLRs from the de-interleaving unit 210 and the synthesis packet storage unit 242 to convert the coded bits into the coded bit LLR (A1, B1, C1, D1, E1, 0, G1, 0, 0, J1, 0, and L1) and the coded bit LLR (A2, B2, C2, D2, 0, F2, 0, H2, 12, 0, K2, and 0), respectively. The packet synthesis unit 411 then performs synthesis by adding the respective bits of the coded bit LLRs subjected to the de-puncturing process to generate a coded bit LLR (A1+A2, B1+B2, C1+C2, D1+D2, E1, F2, G1, H2, I2, J1, K2, and L1) and outputs the coded bit LLR. Even when CC is used in HARQ, the de-puncturing process may be performed before the packet synthesis unit 411 performs the packet synthesis process, as in the case where IR is used in HARQ.

[Second Embodiment]

In a second embodiment of the present invention, in a communication system including a packet transmission device 1 and a packet reception device 3 and using HARQ, a method of reducing the number of retransmissions and the number of iterations of the iteration process by performing the synthesis process in the iteration process of using turbo equalization and by using reliability of the reception signal improved in the retransmission packet when the packet reception device 3 performing the iteration process of using turbo equalization receives the retransmission packet will be described.

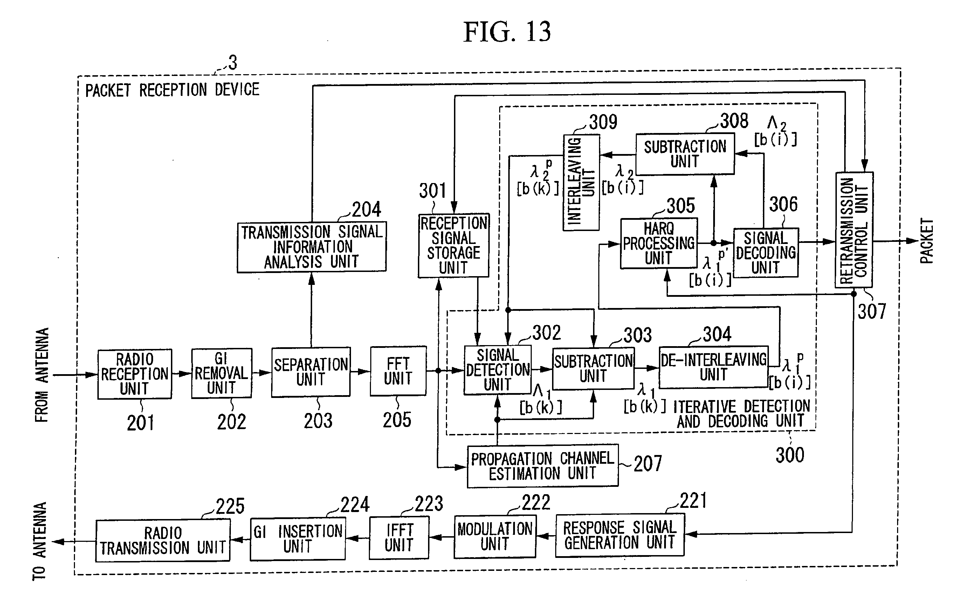

Since the packet transmission device 1 according to this embodiment has the same configuration as the packet transmission device 1 shown in FIG. 1, the description thereof is omitted. The packet reception device 3 according to this embodiment has a configuration partially different from the packet reception device 2 shown in FIG. 2 according to the first embodiment. Hereinafter, units having different functions from those of the packet reception device 2 described in the first embodiment will be described. FIG. 13 is a schematic block diagram illustrating the configuration of the packet reception device 3 according to this embodiment. In FIG. 13, the same reference numerals are given to units corresponding to the units (201 to 205, 207, and 221 to 225) shown in FIG. 2, and the description thereof is omitted.

The packet reception device 3 according to this embodiment includes the radio reception unit (reception unit) 201, the GI removal unit 202, the separation unit 203, the transmission signal information analysis unit 204, the FFT unit 205, the propagation channel estimation unit 207, a retransmission control unit 307, the response signal generation unit 221, the modulation unit 222, the IFFT unit 223, the GI insertion unit 224, the radio transmission unit 225, a reception signal storage unit 301, a signal detection unit 302, a subtraction unit 303, a de-interleaving unit 304, an HARQ processing unit 305, a signal decoding unit 306, a subtraction unit 308, and an interleaving unit 309. The packet reception device 3 further includes an iterative detection and decoding unit 300 including the signal detection unit 302, the subtraction unit 303, the de-interleaving unit 304, HARQ processing unit 305, the signal decoding unit 306, the subtraction unit 308, and the interleaving unit 309.

Hereinafter, the operation when the packet reception device 3 receives an initial transmission packet will be described. The initial process for the initial transmission packet will be first described. The radio reception unit 201, the GI removal unit 202, the separation unit 203, the reception signal information analysis unit 204, and the FFT unit 205 perform the same processes as the packet reception device 2. The frequency-domain signal output by the FFT unit 205 is input to the signal detection unit 302, the propagation channel estimation unit 207, and the reception signal storage unit 301. The reception signal storage unit 301 stores the frequency-domain initial transmission packet signal from the FFT unit 205, for an iteration process when a retransmission packet is received, which is described below. The signal detection unit 302 performs a signal detection process based on the reception signal, an a priori LLR output by the interleaving unit 309, and the propagation channel estimation result of the propagation channel estimation unit 207. Specifically, the most likely signal (here, LLR) is estimated from given data (the reception signal and the propagation channel estimation value). A signal detection method, which is described below, can be used as the estimation method.

For example, when the maximum likelihood estimation method is used, all likelihood signals are examined and the maximum likelihood signal is estimated among them. That is, an a posteriori LLR (subsequent information) of each coded bit expressed in Equation (4) when a reception signal vector r(t) is given is calculated and output. In the equation, b(k) denotes transmission signal of a k-th bit after the interleaving unit 102 (FIG. 1) of the packet transmission device 1 performs the interleaving process. Pr[A|B] denotes the conditional probability of A, given B. That is, Pr[b(k)|r(t)] is the conditional probability of code b(k) transmitted in effect when r(t) is received.

$$\Lambda_1[b(k)] = \log \frac{\Pr[b(k) = +1 \mid r(t)]}{\Pr[b(k) = -1 \mid r(t)]} \qquad \cdots \quad (4)$$

The subtraction unit 303 subtracts the a priori LLR, $\lambda_2{}^P[b(k)]$, fed back from the interleaving unit 309 from the a posteriori LLR, $\Lambda_1[b(k)]$, from the signal detection unit 302. Here, the a posteriori LLR, $\Lambda_1[b(k)]$, can be expressed by Equation (5) from Bayes' theorem. An external LLR, $\lambda_1[b(k)]$, and an a priori LLR, $\lambda_2{}^P[b(k)]$, when the reception vector r(t) and the a priori LLR, $\lambda_2{}^P[b(k')]$, (where k'=k) are known are expressed by Equation (6). Accordingly, since $\Lambda_1[b(k)]$ is the sum of the external LLR, $\lambda_1[b(k)]$, and the a priori LLR, $\lambda_2{}^P[b(k)]$, the output of the subtraction unit 303 that subtracts $\lambda_2{}^P[b(k)]$ from $\Lambda_1[b(k)]$ is the external LLR, $\lambda_1[b(k)]$. In the initial process, however, since the output of the interleaving unit 309, that is, $\lambda_2{}^P[b(k)]$, is equal to 0, the subtraction unit 303 outputs the a posteriori LLR, $\Lambda_1[b(k)]$, as the external LLR, $\lambda_1[b(k)]$, without change.

$$\Lambda_1[b(k)] = \log \frac{\Pr[r(t) \mid b(k) = +1]}{\Pr[r(t) \mid b(k) = -1]} + \log \frac{\Pr[b(k) = +1]}{\Pr[b(k) = -1]} \qquad \cdots \quad (5)$$

$$\lambda_1[b(k)] = \log \frac{\Pr[r(t) \mid b(k) = +1]}{\Pr[r(t) \mid b(k) = -1]}$$

$$\lambda_2^P[b(k)] = \log \frac{\Pr[b(k) = +1]}{\Pr[b(k) = -1]} \qquad \cdots \quad (6)$$

Here, Pr[r(t)|b(k)] denotes a conditional probability at which r(t) is received under the condition that b(k) is transmitted.

The de-interleaving unit 304 performs the de-interleaving process on the external LLR, $\lambda_1[b(k)]$, and outputs the a priori LLR, $\lambda_1^P[b(i)]$, for the signal decoding unit 306. Here, b(i) denotes transmission signal of an i-th bit before the interleaving unit 102 (FIG. 1) of the packet transmission device 1 performs the interleaving process.

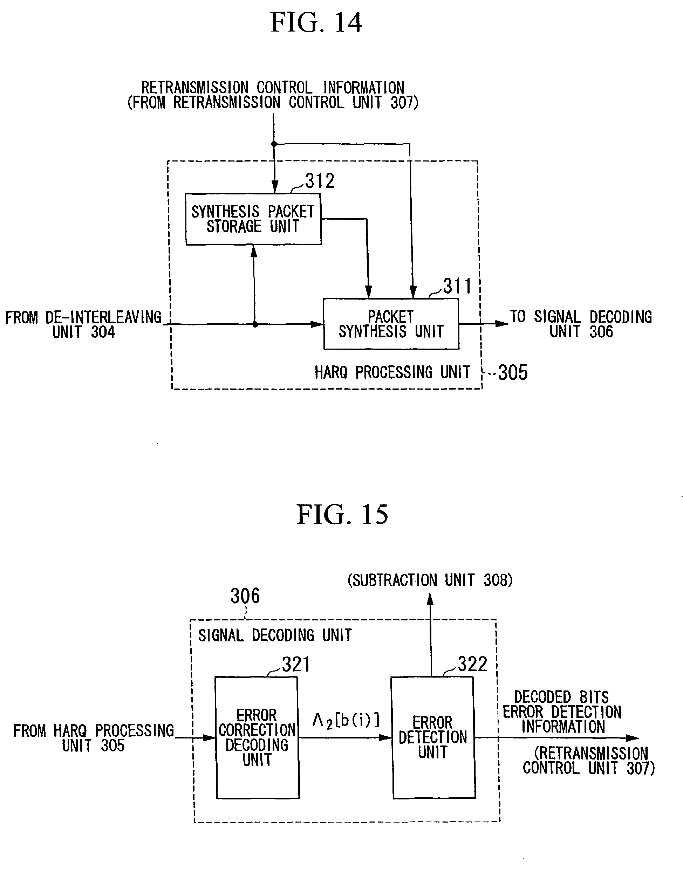

FIG. 14 is a schematic block diagram illustrating the configuration of HARQ processing unit 305. HARQ processing unit 305 includes a packet synthesis unit 311 and a synthesis packet storage unit 312. In the initial process, the synthesis packet storage unit 312 stores the a priori LLR, $\lambda_1^P[b(i)]$, input from the de-interleaving unit 304 to HARQ processing unit 305. The packet synthesis unit 311 synthesizes the a priori LLR stored in the synthesis packet storage unit 312 and the a priori LLR output by the de-interleaving unit 311 and outputs a synthesized a priori LLR, $\lambda_1^{P'}[b(i)]$. However, in the case of the initial transmission packet, the a priori LLR, $\lambda_1^P[b(i)]$, is output as the synthesized a priori LLR, $\lambda_1^{P'}[b(i)]$, without change.

FIG. 15 is a schematic block diagram illustrating the configuration of the signal decoding unit 306. The signal decoding unit 306 includes an error correction composite unit 321 and an error detection unit 322. The error correction decoding unit 321 performs an error correction decoding process on the synthesized a priori LLR, $\lambda_1^{P'}[b(i)]$, from HARQ processing unit 305 to calculate an a posteriori LLR, $\Lambda_2[b(i)]$, expressed by Equation (7). In the equation, M denotes a frame length.

$$\Lambda_2[b(i)] = \log \frac{\Pr[b(i) = +1 \,|\, \{\lambda_1^{p'}[b(i)]\}_{i=0}^{M-1}]}{\Pr[b(i) = -1 \,|\, \{\lambda_1^{p'}[b(i)]\}_{i=0}^{M-1}]} \qquad \cdots \quad (7)$$

The error detection unit 322 performs hard decision on the information bits of the a posteriori LLR, $\Lambda_2[b(i)]$, obtained by the error correction decoding unit 321 and performs CRC on the hard decision result to detect an error. When no error is detected, the error detection unit 322 terminates the iteration process and outputs the decoded bits and error detection information as the hard decision result to the retransmission control unit 307. When an error is detected, the error detection unit 322 outputs the a posteriori LLR, $\Lambda_2[b(i)]$, to the subtraction unit 308 to perform the iteration process.

Next, the iteration process for the initial transmission packet will be described. When the error detection unit 322 detects an error as described above, the error detection unit 322 of the signal decoding unit 306 outputs the a posteriori LLR, $\Lambda_2[b(i)]$, obtained by the error correction decoding unit 321 to the subtraction unit 308 shown in FIG. 13. The subtraction unit 308 subtracts the synthesized a priori LLR, $\lambda_1^{P'}[b(i)]$, output by HARQ processing unit 305 from the a posteriori LLR, $\Lambda_2[b(i)]$. Here, the a posteriori LLR, $\Lambda_2[b(i)]$, can be expressed by Equation (8) from Bayes' theorem. In addition, $\lambda_2[b(i)]$ is called an external LLR (external information) and is expressed as bits of b(i) obtained from the a priori LLR, $\lambda_1^{P'}[b(i')]$, and the trellis structure of the error correction code.

$$\Lambda_2[b(i)] = \lambda_2[b(i)] + \lambda_1^{p'}[b(i)] \qquad \cdots \quad (8)$$

Therefore, the subtraction unit 308 subtracting the synthesized a priori LLR, $\lambda_1^{P'}[b(i)]$, from the a posteriori LLR, $\Lambda_2[b(i)]$, outputs the external LLR, $\lambda_2[b(i)]$. The interleaving unit 309 performs the interleaving process on the external LLR, $\lambda_2[b(i)]$, from the subtraction unit 308 to rearrange the bit order, like the interleaving unit 102 of the packet transmission device 1, and outputs an a priori LLR, $\lambda_2[b(k)]$, for the signal detection unit 302. The signal detection unit 302 performs a signal detection process using a signal detection method based on the input a priori LLR, $\lambda_2^P[b(k)]$, the frequency-domain initial transmission packet signal stored in the reception signal storage unit 301, and the propagation channel estimation result from the propagation channel estimation unit 207.

Specifically, the most likely signal (here, LLR) is estimated from given data (the reception signal and the propagation channel estimation value). A signal detection method, which is described below, can be used as the estimation method. For example, when the maximum likelihood estimation method is used, all likelihood signals are examined and the maximum likelihood signal is estimated among them. That is, the a posteriori LLR, $\Lambda_1[b(k)]$, is calculated. The signal detection process is then performed until the error detection unit 322 of the signal decoding unit 306 determines that the iteration process has ended.

Next, the operation when the packet reception device 3 receives the retransmission packet signal will be described. The radio reception unit 201, the GI removal unit 202, the separation unit 203, and the transmission signal information analysis unit 204 perform the same processes as those performed when the packet reception device 2 receives the retransmission packet. When the transmission signal information analysis unit 204 determines that the reception signal is the retransmission packet based on the transmission signal information, the retransmission control unit 307 receiving the determination result generates retransmission control information instructing to process the received signal as the retransmission packet, and outputs the retransmission control information to HARQ processing unit 305 and the reception signal storage unit 301.

Hereinafter, the initial process when the retransmission packet is received will be described. The frequency-domain of the retransmission packet signal output by the FFT unit 205 is input to the signal detection unit 302 and the propagation channel estimation unit 207. The signal detection unit 302 calculates the a posteriori LLR, $\Lambda_1[b(k)]$, from the reception signal vector r(t) and outputs the a posteriori LLR, $\Lambda_1[b(k)]$. At this time, the a priori LLR, $\lambda_2^P[b(k)]$, is equal to zero. The subtraction unit 303 sets $\lambda_2^P[b(k)]=0$ since the process is the initial process, and outputs the a posteriori LLR, $\Lambda_1[b(k)]$, from the signal detection unit 302 as the external LLR, $\lambda_1[b(k)]$, without change. The de-interleaving unit 304 performs a de-interleaving process, which is the reverse of bit rearrangement in the interleaving unit 102 of the packet transmission device 1, on the external LLR, $\lambda_1[b(k)]$, and outputs the a priori LLR, $\lambda_1^P[b(i)]$, for the signal decoding unit 306 to HARQ processing unit 305.

The retransmission control information from the retransmission control unit 307 and the a priori LLR, $\lambda_1^P[b(i)]$, from the de-interleaving unit 304 are input to. HARQ processing unit 305. The synthesis packet storage unit 312 of HARQ processing unit 305 shown in FIG. 14 determines that the process is a retransmission packet process based on the retransmission control information, and outputs the a priori LLR of the initial transmission packet stored in the initial process for the initial transmission packet. The packet synthesis unit 311 synthesizes the a priori LLR of the initial transmission packet output by the synthesis packet storage unit 312 and the a priori LLR of the retransmission packet output by the de-interleaving unit 304, and outputs the synthesized a priori LLR, $\lambda_1^{P'}[b(i)]$.

The synthesized a priori LLR, $\lambda_1^{P'}[b(i)]$, is input from the packet synthesis unit 311 of HARQ processing unit 305 to the signal decoding unit 306. The error correction decoding unit 321 of the signal decoding unit 306 shown in FIG. 15 performs the error correction decoding process on the synthesized a priori LLR, $\lambda_1^{P'}[b(i)]$, to calculate the a posteriori LLR, $\Lambda_2[b(i)]$. The error detection unit 322 performs hard decision on the respective information bits of the a posteriori LLR calculated by the error correction decoding unit 321 and performs CRC on the hard decision result to detect an error. When no error is detected, the error detection unit 322 terminates the iteration process and outputs the decoded bits and the error detection information as the hard decision result to the retransmission control unit 307. The retransmission control unit 307 outputs the error detection information to the response signal generation unit 221 and also outputs a packet consisting of the decoded bits. Alternatively, when an error is detected, the error detection unit 322 outputs the a posteriori LLR, $\Lambda_2[b(i)]$, to the subtraction unit 308 to perform the iteration process.

Next, the iteration process when an error is detected, as described above, that is, when the retransmission packet is received and an error is detected in the result of performing error correction decoding on the synthesized a priori LLR, $\lambda_1^{P'}[b(i)]$, obtained by synthesizing the demodulation result for the initial transmission packet and the demodulation result for the retransmission packet will be described. As described above, the error detection unit 322 of the signal decoding unit 306 outputs the a posteriori LLR, $\Lambda_2[b(i)]$, calculated by the error correction decoding unit 311 to the subtraction unit 308. The subtraction unit 308 subtracts the synthesized a priori LLR, $\lambda_1^{P'}[b(i)]$, from the a posteriori LLR, $\Lambda_2[b(i)]$, and outputs the external LLR, $\lambda_2[b(i)]$. The interleaving unit 309 performs the interleaving process on the external LLR, $\lambda_2[b(i)]$, and outputs the a priori LLR, $\lambda_2^P[b(k)]$, for the signal detection unit 302.

The reception signal storage unit 301 outputs the frequency-domain signal of the stored initial transmission packet based on the input retransmission control information. The signal detection unit 302 calculates the a posteriori LLR, $\Lambda_1[b(k)]$, based on the a priori LLR, $\lambda_2^P[b(k)]$, input from the interleaving unit 309 and the frequency-domain initial transmission packet signal input from the reception signal storage unit 301.

The subtraction unit 303 and the de-interleaving unit 304 then perform the same processes as those described above. HARQ processing unit 305 performs the above-described process to synthesize the packets even in the iteration process. The synthesis packet storage unit 312 outputs the a priori LLR obtained in the initial process for the stored initial transmission packets based on the retransmission control information. The packet synthesis unit 311 synthesizes the a priori LLR of the initial transmission packets output by the synthesis packet storage unit 312 and the a priori LLR output by the de-interleaving unit 304 and outputs the synthesized LLR, $\lambda_1^{P'}[b(i)]$. The signal decoding unit 306 performs the same process as that described above repeatedly until the error detection unit 322 of the signal decoding unit 306 determines that the iteration process has ended. Like the retransmission control unit 213, the retransmission control unit 307 outputs the error detection information received from the signal decoding unit 306 to the response signal generation unit 221 and also outputs the packet consisting of the decoded bits when receiving the decoded bits.

Accordingly, in the communication system using HARQ, when the packet reception device 3 performing the iteration process using turbo equalization receives the retransmission packet, the packet reception device 3 synthesizes the demodulation result for the retransmission packet in the iteration process and the demodulation result for the initial transmission packet and utilizes the reliability of the reception signal improved by the retransmission packet, thereby reducing the number of HARQ retransmissions and the number of iterations of turbo equalization.

Maximum likelihood decoding (MLD), maximum a posteriori probability (MAP), a log-MAP method, a max-log-MAP method, a soft output Viterbi algorithm (SOVA), and so on may be used for the signal detection in the signal detection 302 and the signal decoding in the signal decoding unit 306, but the present invention is not limited thereto.

While in the above description, HARQ processing unit 305 uses the a priori LLR obtained in the initial process for the initial transmission packets stored in the synthesis packet storage unit 312 and synthesized by the packet synthesis unit 311, the present invention is not limited thereto. For example, the a priori LLR obtained in the final iteration process may be used. Alternatively, any one of the a priori LLRs obtained in the respective iteration processes may be used. For example, the a priori LLR with the most likelihood among the a priori LLRs obtained in the respective iteration processes may be used.

While in the above description, HARQ processing unit 305 uses the same a priori LLR for the initial transmission packets to be synthesized in the respective iteration processes, the present invention is not limited thereto. For example, all of the a priori LLRs obtained in the respective iteration processes on the initial transmission packet may be stored in the synthesis packet storage unit 311, and different a priori LLRs may be synthesized in the respective iteration processes when the retransmission packet is received.

In the above description, when the packet reception device 3 receives the initial transmission packet, requests the packet transmission device 1 to retransmit the packet, and receives the retransmission packet, the two packets are synthesized as described above. However, the present invention is not limited thereto. For example, when at least two retransmission packets are received, the demodulation results for all the received packets may be synthesized. Alternatively, the demodulation results for at least two packets among all the received packets may be synthesized.

While in the above description, the reception initial transmission packet signal stored in the reception signal storage unit 311 is used as the reception signal for performing the signal detection process, in the iteration process when an error is detected in the result obtained by performing the error correction decoding process on the data of the demodulation result for the initial transmission packet and the demodulation result for the retransmission packet after the retransmission packet is received, the present invention is not limited thereto. The retransmission packet may be used as the reception signal for performing the interference cancellation process.

In the above description, the multi-carrier signal is used as the transmission and reception signals, but a single carrier signal may be used. While in the above description, the packet transmission device 1 includes the interleaving unit 102 and the packet reception device 3 includes the de-interleaving unit 304 and the interleaving unit 309, the packet transmission device 1 and the packet reception device 3 may not include the interleaving unit and the packet reception device may not include the de-interleaving unit.

While in the above description, the packet reception device 3 performs an iteration process using frequency-domain turbo equalization, the communication device may perform the iteration process using time-domain turbo equalization. The communication device may perform a stream separation process when transmitting MIMO. When the stream separation process is performed when transmitting MIMO, the reception communication device includes a stream separation unit separating a plurality of spatially multiplexed streams.

[Third Embodiment]

In a third embodiment, in a communication system using HARQ performing CC, a method of reducing the number of retransmissions of HARQ and the number of iterations of the interference canceller by synthesizing the initial transmission packet and a signal after FFT, that is, a frequency-domain signal, and by using reliability of the reception signal improved in the retransmission packet when a packet reception device 4 performing the iteration process using an interference canceller receives the retransmission packet will be described.

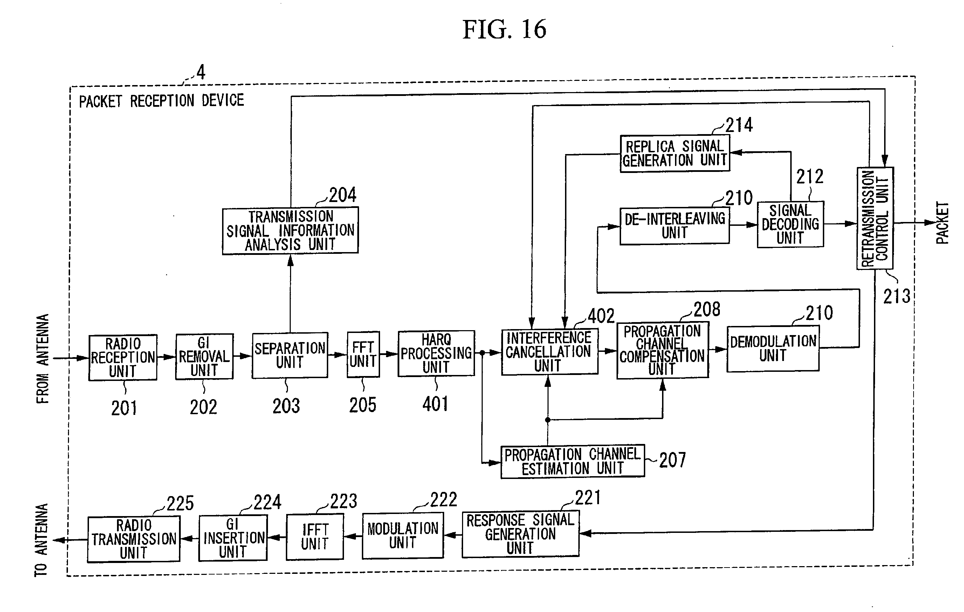

Since the packet transmission device 1 according to this embodiment has the same configuration as the packet transmission device 1 shown in FIG. 1, the description thereof is omitted. FIG. 16 is a schematic block diagram illustrating the configuration of the packet reception device 4 according to this embodiment. In the drawing, the same reference numerals are given to the units corresponding to the units (201 to 205, 207 to 210, 212 to 214, and 221 to 225) shown in FIG. 2, and their description thereof is omitted. The configuration different from the packet reception device 2 shown in FIG. 2 according to the first embodiment is the position and process of HARQ processing unit and the configuration of the interference cancellation unit.

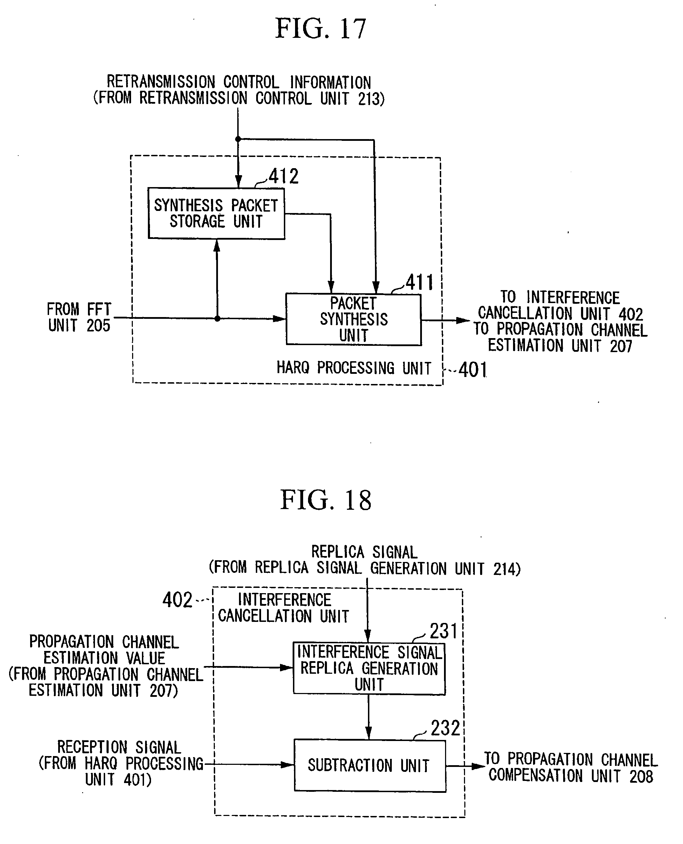

FIG. 17 is a schematic block diagram illustrating the configuration of an HARQ processing unit 401 according to this embodiment. HARQ processing unit 401 includes a packet synthesis unit 411 and a synthesis packet storage unit 412. FIG. 18 is a schematic block diagram illustrating the configuration of an interference cancellation unit 402 according to this embodiment. The interference cancellation unit 402 includes an interference signal replica generation unit 231 and a subtraction unit 232. The configuration of this interference cancellation unit is different in that the interference cancellation unit 206 according to the first embodiment includes the reception signal storage unit 233. The interference signal replica generation unit 231 and the subtraction unit 232 are the same as the interference signal replica generation unit 231 and the subtraction unit 232, respectively, according to the first embodiment.

The operation when the packet reception device 4 receives the initial transmission packet will be described. The radio reception unit 201, the GI removal unit 202, the separation unit 203, the transmission signal information analysis unit 204, and the FFT unit 205 perform the same processes as the packet reception device 2. The frequency-domain initial transmission packet signal output by the FFT unit 205 is input to HARQ processing unit 401. The synthesis packet storage unit 412 of HARQ processing unit 411 shown in FIG. 17 stores the input initial transmission packet to synthesize the initial transmission packet and the retransmission packet. The packet synthesis unit 411 performs the synthesis of HARQ, but outputs the initial transmission packet without change.

Referring back to FIG. 16, the signal output by the packet synthesis unit 411 of HARQ processing unit 401 is input to the interference cancellation unit 402. The subtraction unit 232 of the interference cancellation unit 402 shown in FIG. 18 subtracts the interference signal replica generated by the interference signal replica generation unit 23 from the signal output by the packet synthesis unit 411 of HARQ processing unit 401 to cancel interference. However, in the input initial process, the signal is output without change. Here, the interference signal may be considered due to inter-code interference, inter-carrier interference, or the like. Moreover, when the packet is subjected to a code multiplexing process, inter-code interference may be present. However, the present invention is not limited thereto. Thereafter, the packet reception device 2 according to the first embodiment performs the same processes.

Next, the operation when the packet reception device 4 receives the retransmission packet will be described. The radio reception unit 201, the GI removal unit 202, the separation unit 203, the transmission signal information analysis unit 204, and the FFT unit 205 perform the same processes as the packet reception device 2. The transmission signal information analysis unit 204 determines that the received signal is the retransmission packet based on the transmission signal information. The retransmission control unit 213 receiving the determination result generates retransmission control information used to give an instruction to process the received signal as the retransmission packet, and then outputs the retransmission control information to HARQ processing unit 401.

The frequency-domain of the retransmission packet signal is input from the FFT unit 205 to HARQ processing unit 401. The synthesis packet storage unit 412 of HARQ processing unit 401 shown in FIG. 17 stores the frequency-domain signal of the input retransmission packet. The synthesis packet storage unit 412 outputs the frequency-domain initial transmission packet signal stored in the process of the initial transmission packet to the packet synthesis unit 411, when receiving the instruction to process the received signal as the retransmission packet by the retransmission control information from the retransmission control unit 213. The packet synthesis unit 411 synthesizes the frequency-domain from the retransmission packet signal from the FFT unit 205 and the frequency-domain initial transmission packet signal from the synthesis packet storage unit 412, and then outputs the result. Then, the same process as that performed by the packet reception device 2 according to the first embodiment is performed based on the signal obtained through the synthesis in the packet synthesis unit 411.

In the communication system using HARQ, when the packet reception device 4 performing the iteration process using the interference canceller receives the retransmission packet, the packet synthesis unit 411 synthesizes the frequency-domain initial transmission packet signal and the frequency-domain initial transmission packet signal. In this way, by utilizing the reliability of the reception signal improved by the retransmission packet, the number of retransmissions of HARQ and the number of the iteration processes in the interference canceller can be reduced.

While in the above description, HARQ processing unit 402 is located immediately after the FFT unit 205 to synthesize the frequency-domain signals, the present invention is not limited thereto. For example, HARQ processing unit may be located immediately after the radio reception unit 201, the GI removal unit 202, or the separation unit 202 to synthesize time-domain signals.

In this embodiment, the packet reception device 4 includes an interference canceller, but may include a turbo equalizer, as in the packet reception device 3 according to the second embodiment.


[Fourth Embodiment]

In a fourth embodiment of the present invention, in a communication system including a packet transmission device 5 and a packet reception device 6 and performing MIMO transmission using HARQ, a method of reducing the number of retransmissions of HARQ and the number of iterations of a signal separation process by performing a synthesis process in the iteration process and by using reliability of the reception signal improved in the retransmission packet when the packet reception device 6 performing signal separation through by the iteration process receives the retransmission packet will be described.

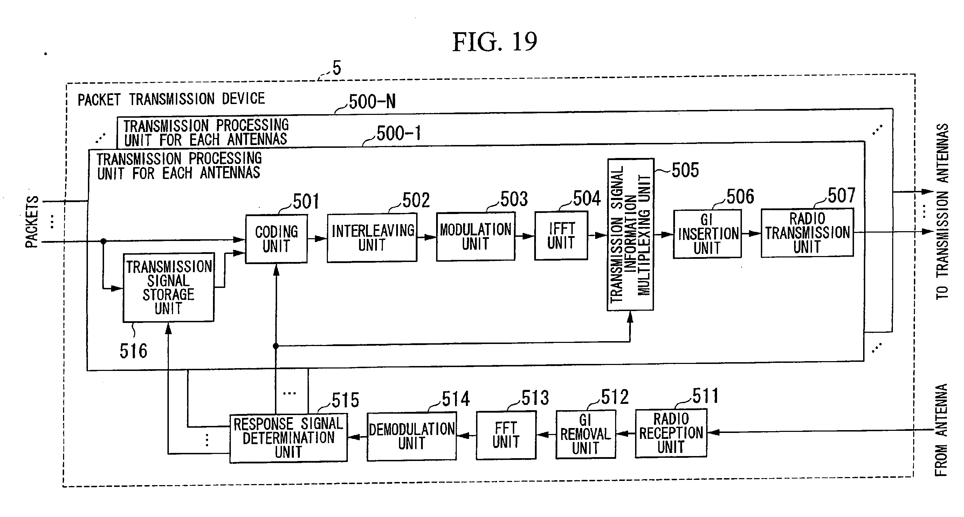

FIG. 19 is a schematic block diagram illustrating the configuration of the packet transmission device 5 according to this embodiment. The packet transmission device 5 includes N transmission processing units (transmission processing units for each packets) 500-1 to 500-N for each antennas, a radio reception unit 511, a GI removal unit 512, an FFT unit 513, a demodulation unit 514, and a response signal determination unit 515. The transmission processing units 500-1 to 500-N for each antennas each include a coding unit 501, an interleaving unit 502, a modulation unit 503, an IFFT unit 504, a transmission signal information multiplexing unit 505, a GI insertion unit 506, a radio transmission unit (transmission unit) 507, and a transmission signal storage unit 516. In this embodiment, the case where the packet transmission device 5 transmits different streams from the N transmission antennas will be described. Here, stream refers to a signal string transmitted from each transmission antenna. Hereinafter, in the following description, it is assumed that the streams are different packets, respectively. In addition, a signal obtained by performing a MIMO multiplexing process (spatial multiplexing process) on the plurality of packets is called a frame.

Packets for the respective transmission antennas desired to be transmitted to the packet reception device 6 are input to the transmission processing units 500-1 to 500-N for each antennas in the packet transmission device 5. Here, the operation when one packet is transmitted to each transmission antenna will be described. That is, the case where N packets are transmitted by the N transmission antennas will be described, but the present invention is not limited thereto. Information bits forming the input packet are input to the decoding unit 501 and the transmission signal storage unit 516 of each of the transmission processing units 500-1 to 500-N for each antennas. The transmission signal storage unit 516 stores the information bits to retransmit the information bits when the packet reception device 6 makes a request for retransmission.

The coding unit 501 performs the error detection coding process on the input information bits using CRC or the like, and then performs the error correction coding process using convolutional code, a turbo code, an LDPC code, or the like to generate coded bits. The interleaving unit 502 performs the interleaving process on the coded bits. The modulation unit 503 modulates the interleaved coded bits and maps the coded bits to modulation symbols such as QPSK or 16QAM. The IFFT unit 504 performs the frequency-time conversion process on the modulation symbols received from the modulation unit 503 in accordance with IFFT to generate the time-domain signal.

The transmission signal information multiplexing unit 505 multiplexes the transmission signal information, which indicates whether the packet is the initial transmission packet or the retransmission packet, into the time-domain signal generated by the IFFT unit 504. Each piece of the transmission signal information may be transmitted so as to be separated at the receiver. For example, the time-division multiplexing process, the frequency-division multiplexing process, the code-division multiplexing process, the MIMO multiplexing process, or the like may be used. The GI insertion unit 506 inserts the GI into the signal into which the transmission signal information has been multiplexed. The radio transmission unit 507 performs the digital-analog conversion process and the frequency conversion process on the signal into which the GI is inserted, and then transmits the signal via the transmission antenna.

The radio reception unit 511 receives the signal including the response signal for each packet (each transmission antenna) from the packet reception device 6 via the antenna, performs the frequency conversion process and the analog-digital conversion process, and then outputs the conversion result. The GI removal unit 512 removes the GI from the signal output by the radio reception unit 511. The FFT unit 513 performs the FFT process on the signal from which the GI has been removed to generate the frequency-domain signal. The demodulation unit 514 demodulates each frequency-domain signal. The response signal determination unit 515 extracts the response signal for each packet transmitted by the corresponding device from the demodulated signal to determine whether the response signal is ACK or NACK. The response signal determination unit 515 inputs the determination result to the transmission signal storage unit 516, the coding unit 501, and the transmission signal information multiplexing unit 505 of each of the transmission processing units for each antennas transmitting the packets corresponding to the original response signals of the determination among the transmission processing units 500-1 to 500-N for each antennas. When the response signal is NACK, the transmission processing units for each antennas multiplex the transmission signal information indicating the retransmission packet and retransmit the packets. Alternatively, when the response signal is ACK, the transmission signal storage unit 516 clears the stored packet and the transmission processing unit for each antennas, and transmits the subsequent packet as the initial transmission packet.

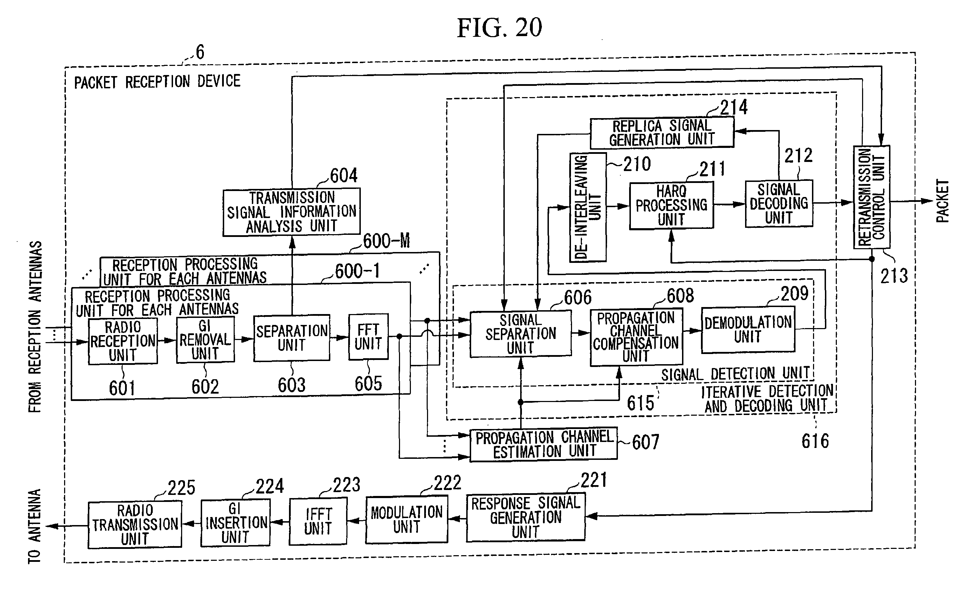

FIG. 20 is a schematic block diagram illustrating the configuration of the packet reception device 6 according to this embodiment. The packet reception device 6 includes M reception processing units 600-1 to 600-M for each antennas, a transmission signal information analysis unit 604, a signal separation unit (a packet separation unit, a stream separation unit, an interference cancellation unit, a soft cancellation unit, and an interference removal unit) 606, a propagation channel estimation unit 607, a propagation channel compensation unit (MMSE filter unit) 608, the demodulation unit 209, the de-interleaving unit 210, HARQ processing unit 211, the signal decoding unit 212, the replica signal generation unit (soft replica generation unit) 214, the retransmission control unit 213, the response signal generation unit 221, the demodulation unit 222, the IFFT unit 223, the GI insertion unit 224, and the radio transmission unit 225. The reception processing units 600-1 to 600-M for each antennas each include a radio reception unit (reception unit) 601, a GI removal unit 602, a separation unit 603, and an FFT unit 605.

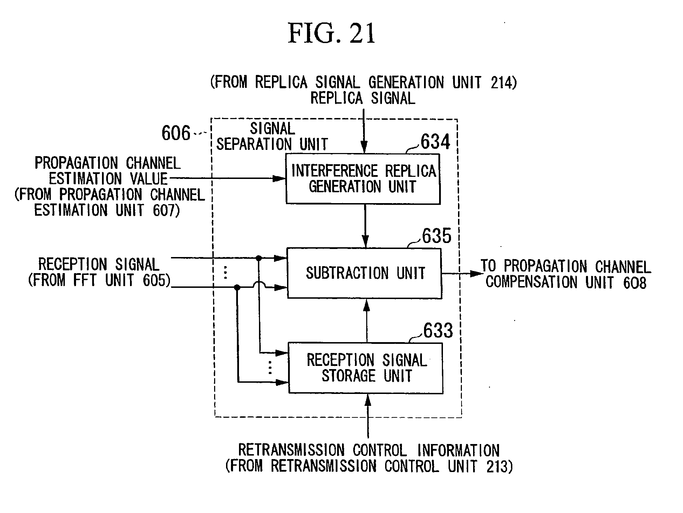

A unit including the signal separation unit 606, the propagation channel compensation unit 608, the demodulation unit 209, the de-interleaving unit 210, HARQ processing unit 211, the signal decoding unit 212, and the replica signal generation unit 214 is called an iterative detection and decoding unit 616. A unit including the signal separation unit 606, the propagation channel compensation unit 608, and the demodulation unit 209 is called a signal detection unit 615. In this embodiment, the case where the packet reception device 6 receives signals via the M reception antennas will be described. In the drawing, the same reference numerals are given to the units corresponding to the units (209 to 214 and 221 to 225) shown in FIG. 2. FIG. 21 is a schematic block diagram illustrating the configuration of the signal separation unit 606 of the packet reception device 6. The signal separation unit 606 includes an interference replica generation unit 634, a subtraction unit 635, and a reception signal storage unit 633.

Hereinafter, the operation when the packet reception device 6 receives a first frame will be first described. Here, all packets multiplexed spatially in the first frame are initial transmission packets. The stream signals (packets) transmitted from the N respective transmission antennas of the packet transmission device 5 are spatially multiplexed and input to the reception processing units 600-1 to 600-M for each antennas via the M reception antennas. The radio reception unit 601 of each of the reception processing units 600-1 to 600-M for each antennas performs the frequency conversion process or the analog-digital conversion process on the input signals, and then outputs the converted signals. The GI removal unit 602 removes the GI from the signal output by the radio reception unit 601. The separation unit 603 separates the signal from which the GI has been removed into the transmission signal information and the signal including the information bits of the packet. The separated transmission signal information is input to the transmission signal information analysis unit 604 and the signal including the information bits is input to the FFT unit 605. The transmission signal information analysis unit 604 determines whether the packet transmitted via each of the N transmission antennas by the packet transmission device 5 is the initial transmission packet or the retransmission packet based on the transmission signal information received via each of the reception antennas. The transmission signal information analysis unit 604 outputs the determination result to the retransmission control unit 213.

On the other hand, the FFT unit 605 receiving the signal including the information bits from the separation unit 603 performs a time frequency conversion process on the signal to generate a frequency-domain signal, and then outputs the frequency-domain signal to the signal separation unit 606 and the propagation channel estimation unit 607. Here, in a MIMO system including the N transmission antennas and the M reception antennas, the reception signal (frequency-domain signal) R(k) of a k-th sub-carrier is expressed by Equation (9). In this equation, H(k) denotes a characteristic of each propagation channel between the transmission antenna and the reception antenna, S(k) denotes transmission signal of each transmission antenna, N(k) denotes the noise of a receiver for the reception antenna, and the superscript T denotes a transposed matrix.

$$
\begin{aligned}
\mathbf{R}(k) &= \mathbf{H}(k)\mathbf{S}(k) + \mathbf{N}(k) \\
\mathbf{R}(k) &= \begin{bmatrix} R_1(k) & \cdots & R_M(k) \end{bmatrix}^T \\
\mathbf{H}(k) &= \begin{pmatrix} H_{11}(k) & \cdots & H_{1N}(k) \\ \vdots & \ddots & \vdots \\ H_{M1}(k) & \cdots & H_{MN}(k) \end{pmatrix} \qquad \cdots \quad (9) \\
\mathbf{S}(k) &= \begin{bmatrix} S_1(k) & \cdots & S_N(k) \end{bmatrix}^T \\
\mathbf{N}(k) &= \begin{bmatrix} N_1(k) & \cdots & N_M(k) \end{bmatrix}^T
\end{aligned}
$$

The propagation channel estimation unit 607 estimates the characteristic H(k) of the propagation channel based on the signals from the reception processing units 600-1 to 60-M for each antennas, and then inputs the result to the signal separation unit 606 and the propagation channel compensation unit 608. The propagation channel estimation unit 607 outputs the estimated propagation channel estimation values as the values for the respective reception antennas. The propagation channel estimation unit 607 stores the propagation channel estimation values of the packets until the packet reception device 6 correctly receives the packets transmitted by the packet transmission device 5. In this embodiment, the propagation channel estimation unit 607 calculates the propagation channel estimation values based on the frequency-domain signals output by the FFT units 605, but the present invention is not limited thereto. The propagation channel estimation values may be calculated based on the time-domain signals before the time-domain signals are input to the FFT unit 605. In addition, the propagation channel estimation unit 607 uses, for example, a method of using a pilot signal including the exiting information between the packet transmission device 5 and the packet reception device 6 as the method of performing the propagation channel estimation process. However, other methods may be used.

The signals for the respective antennas output by the reception processing units 600-1 to 600-M for each antennas are input to the signal separation unit 606. Hereinafter, the operation of the signal separation unit 606 and the propagation channel compensation unit 608 in the initial process for the initial transmission packet will be described. In the initial process, the signal separation unit 606 outputs the input signals without change, since the replica signal is not generated. The reception signal storage unit 633 of the signal separation unit 606 shown in FIG. 21 stores the signals input from the reception processing units 600-1 to 600-M for each antennas to the signal separation unit 606. The signals stored in the reception signal storage unit 633 are synthesized with the reception results of the retransmission packets so as to be used when performing the iterative detection and decoding process on the signals of the initial transmission packets again, when the retransmission packets are received.

The propagation channel compensation unit 608 in FIG. 20 extracts the signal S(k) of each packet from the frequency-domain signal R(k) output by the signal separation unit 606 by multiplying a weight coefficient of the ZF criterion or the MMSE criterion. Therefore, in the initial process, the propagation channel compensation unit 608 simultaneously performs the packet separation process and the propagation channel compensation process. Examples of the weight coefficient used in the initial process include a weight coefficient $W_{ZF}(k)$ of the ZF criterion and a weight coefficient $W_{MMSE}(k)$ of the MMSE criterion, which are expressed by Equation (10). In the equation, the superscript H denotes a complex conjugate transpose of a matrix, the superscript -1 is an inverse matrix, $\sigma^2$ denotes a noise power, and IN denotes an N by N unit matrix. Here, the linear process of the ZF criterion or the MMSE criterion has been described, but a non-linear process of the maximum likelihood (ML) criterion may be used.

$$\mathbf{W}_{ZF}(k) = \mathbf{H}^H(k)\left(\mathbf{H}(k)\mathbf{H}^H(k)\right)^{-1} \quad \text{or} \quad \left(\mathbf{H}^H(k)\mathbf{H}(k)\right)^{-1}\mathbf{H}^H(k)$$
$$\mathbf{W}_{MMSE}(k) = \mathbf{H}^H(k)(\mathbf{H}(k)\mathbf{H}^H(k) + \sigma^2\mathbf{I}_M)^{-1} \quad \text{or} \quad (\mathbf{H}^H(k)\mathbf{H}(k) + \sigma^2\mathbf{I}_N)^{-1}\mathbf{H}^{H(k)}$$
$$\cdots \quad (1\,0)$$

Next, the operations of the signal separation unit 606 and the propagation channel compensation unit 608 of the iterative detection and decoding process (from the second time on) of the first frame will be described. In the iteration process, a transmission signal replica generated by the replica signal generation unit 214, which is described below, is input to the signal separation unit 606. The signal separation unit 606 performs a packet separation process by generating a replica of an interference signal in the signal of a packet desired to be extracted based on the transmission signal replica and the propagation channel estimation value from the propagation channel estimation unit 607 and subtracting the replica from the frequency-domain signal from the FFT unit 605. Here, the case where the packet transmitted from a p-th (where $1 \leq p \leq N$) transmission antenna is extracted will be described. The input transmission signal replica S'(k) is expressed by Equation (11). The interference signal replica generation unit 634 generates an interference signal replica $R_p(k)$ formed from the signal of the packet other than the packet transmitted from the p-th transmission antenna and expressed by Equation (12).

$$\mathbf{S'}(k) = \begin{bmatrix} S_1'(k) & \cdots & S_{p-1}'(k) & S_p'(k) & S_{p+1}'(k) & \cdots & S_N'(k) \end{bmatrix}^T \quad \cdots \quad (1\,1)$$

$$\mathbf{R}_p(k) = \mathbf{H}(k)\,\mathbf{S}_p'(k) \quad \cdots \quad (1\,2)$$

where

$$S'_p(k) = [S'_1(k)\cdots S'_{p-1}(k)\,0\,S'_{p+1}(k)\cdots S'_N(k)]^T$$

The subtraction unit 635 extracts the packet transmitted from the p-th transmission antenna by subtracting the interference signal replica $R_p(k)$ from the frequency-domain signal R(k) from the FFT unit 605. In this way, the subtraction unit 635 performs the signal separation process by extracting the packets from all of the transmission antennas and outputs the results to the propagation channel compensation unit 608. Hereinafter, the process is performed in units of packets. The propagation channel compensation unit 608 performs the propagation channel compensation process on the signal separated into each packet by the signal separation unit 606 using the propagation channel estimation value estimated by the propagation channel estimation unit 607.

The subsequent processes of the demodulation unit 209, the de-interleaving unit 210, HARQ processing unit 211, the signal decoding unit 212, the retransmission control unit 213, and the replica signal generation unit 214 are the same as those of the units of the packet reception device 2 according to the first embodiment in FIG. 2. However, the process is performed in units of packets. The response signal generation unit 221 generates ACK or NACK for each packet based on the error detection information output by the retransmission control unit 213. The subsequent processes of the modulation unit 222, the IFFT unit 223, the GI insertion unit 224, and the radio transmission unit 225 are the same as those of the units of the packet reception device 2 shown in FIG. 2 according to the first embodiment. The response signal for each packet may be transmitted by, for example, code division multiplexing, time division multiplexing, frequency division multiplexing, or MIMO multiplexing in accordance with an orthogonal code. However, the present invention is not limited thereto.

Next, the operation when the packet reception device 6 receives a second frame will be described. Here, the second frame is transmitted based on the response signal for the first frame by the packet transmission device 5. Hereinafter, the operation when the responses for the initial transmission packets in the first frame are all NACK and the packets transmitted as the initial transmission packets by the packet transmission device 5 are all retransmitted in the second frame will be described. The reception signals received via the M reception antennas are input to the reception processing units 600-1 to 600-M for each antennas, and the reception processing units 600-1 to 600-M for each antennas perform the same process as when the initial transmission packet is received. The transmission signal information analysis unit 604 determines that the received packet is the retransmission packet based on the transmission signal information. The retransmission control unit 213 receives the determination result and instructs the signal separation unit 606 and HARQ processing unit 211 to process the received signal as the retransmission packet. Thereafter, the signal separation unit 606, the propagation channel estimation unit 607, the propagation channel compensation unit 608, the demodulation unit 209, and the de-interleaving unit 210 perform the same processes as when the initial transmission packet is received.

HARQ processing unit 211 performs the same process as that performed by HARQ processing unit 211 of the packet reception device 2 shown in FIG. 2 according to the first embodiment. The coded bit LLR of the retransmission packet and the retransmission control information output by the retransmission control unit 213 are input to HARQ processing unit 211. Based on the retransmission control information, the synthesis packet storage unit 242 shown in FIG. 4 outputs the coded bit LLR obtained in the initial process for the stored initial transmission packet to the packet synthesis unit 241. Based on the retransmission control information, the packet synthesis unit 241 synthesizes the coded bit LLR of the retransmission packet obtained from the second frame and the coded bit LLR obtained in the initial process for the initial transmission packet obtained from the first frame output by the synthesis packet storage unit 242, and then outputs the coded bit LLR to the signal decoding unit 212. In this case, this process is performed for each of the corresponding packets. Then, the signal decoding unit 212 and the replica signal generation unit 214 also perform the same processes as those performed by the signal decoding unit 212 and the replica signal generation unit 214 of the packet reception device 2 shown in FIG. 2 according to the first embodiment. In the iteration process on the retransmission packet, the signal separation unit 606 performs the iteration process on the frequency-domain initial transmission packet signal, as in the first embodiment. The above-described processes are repeated until the signal decoding unit 212 determines that no error is detected in all of the packets or the retransmission process has ended.

According to this embodiment, in the communication system performing the MIMO transmission process using HARQ, when the packet reception device 6 performing signal separation through the iteration process receives the retransmission packet, the packet reception device synthesizes the signal based on the retransmission packet and the signal based on the initial transmission packet received before the retransmission packet or the signal based on the retransmission packet, and utilizes the reliability of the reception signal improved by the retransmission packet, thereby reducing the number of retransmissions and the number of iterations of the iteration process.

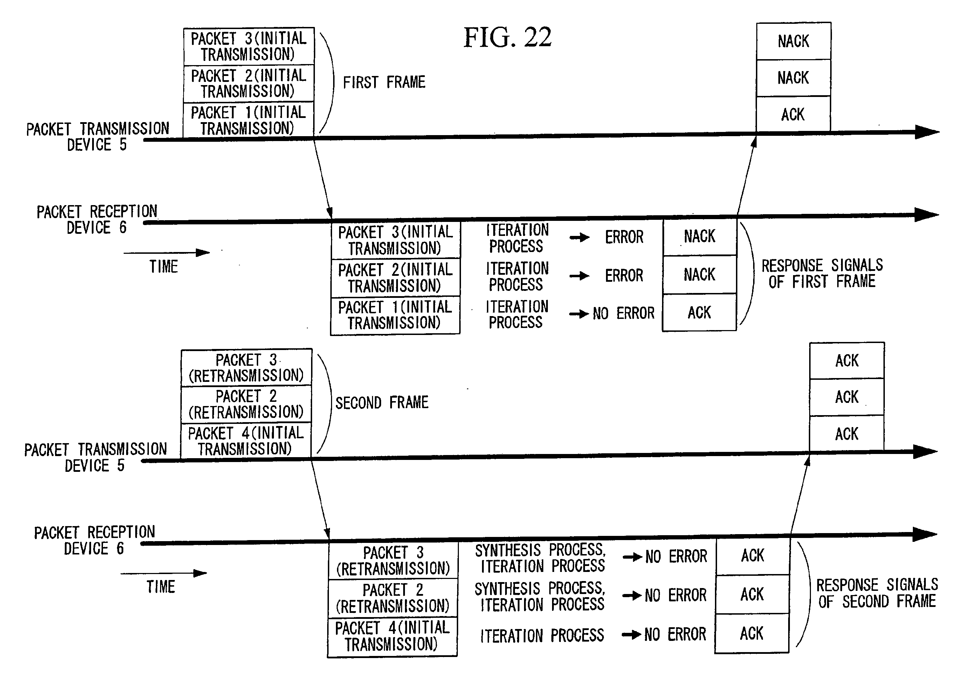

In this embodiment, the case where all of the initial transmission packets are retransmitted has been described. However, the initial transmission packets and the retransmission packets may coexist during the MIMO transmission. For example, as shown in FIG. 22, the case where three packets are multiplexed and transmitted for each frame will be described. The unique number and number of transmissions are added as transmission signal information to each packet. The packet transmission device 5 transmits Packets 1 to 3 of a first frame as the initial transmission packets to the packet reception device 6. It is assumed that the packet reception device 6 detects no error in Packet 1 as the result of the above-described iteration process and detects errors in Packets 2 and 3. The packet reception device 6 transmits the response signals to request the packet transmission device 5 to retransmit packets 2 and 3. At this time, the coded bit LLRs of the packets 2 and 3 are stored to perform the synthesis process using HARQ.

The packet transmission device 5 generates a second frame including Packets 2 and 3 as the retransmission packets and Packet 4 as the initial transmission packet based on the response signals from the packet reception device 6. Likewise, the packet reception device 6 receives the second frame transmitted by the packet transmission device 5 and performs the iteration process. During the iteration process, the packet synthesis unit 241 synthesizes the retransmitted Packets 2 and 3 using HARQ, as described above. Since no error is detected in all of Packets 2 to 4 as the result of the process, the packet reception device 6 transmits the receipt notifications ACK as the response signals to the packet transmission device 5.

In the iteration process from the second time on when receiving the second frame, the first frame or the second frame may be used as the reception signal in order for the signal separation unit 606 to separate the signal to receive the retransmission packet in the second frame. In the replica signal of the packet for which the response indicates ACK among the packet subjected to the MIMO multiplexing process during the iteration process, the replica signal generation unit 214 may use the maximum LLR of the hard decision result or the soft determination value.
The case where the MIMO multiplexing (special multiplexing) process is performed has been described, but the present invention is not limited thereto. Frequency division multiplexing, time division multiplexing, code division multiplexing, interleave division multiple access (IDMA), or the like may be used.

While in the above description, the initial transmission packet synthesized by HARQ processing unit 211 is the coded bit LLR obtained in the initial process, the present invention is not limited thereto. For example, the coded bit LLR obtained in the final process may be used. Alternatively, either one of the coded bit LLRs obtained in the respective iteration processes may be used. For example, the coded bit LLR with the most likelihood may be used.

While in the above description, the retransmission packet synthesized by HARQ processing unit 211 is the coded bit LLR obtained in the initial process, the present invention is not limited thereto. For example, the coded bit LLR obtained by performing the iteration process by a predetermined number may be used. Alternatively, either one of the coded bit LLRs obtained in the respective iteration processes may be used. For example, the coded bit LLR with the most likelihood may be used.

In the above description, the packet reception device 6 receives the initial transmission packets, and then makes a request for the retransmission using the non-receipt notifications NACK to the packet transmission device 5. Then, the packet reception device 6 receives the retransmission packets to synthesize two packets among the retransmission packets. However, the present invention is not limited thereto. For example, when at least two retransmission packets are received, the results obtained after the demodulation process is performed on all of the received packets may be synthesized. Alternatively, the results obtained after the demodulation process is performed on at least two packets among all of the received packets may be synthesized.

In the above description, the reception initial transmission packet signal stored in the reception signal storage unit 633 is used as the reception signal for performing the signal separation process in the iteration process when an error is detected in the error correction decoding result of the data obtained by synthesizing the demodulation result for the initial transmission packet and the demodulation result for the retransmission packet after the retransmission packet is received. However, the present invention is not limited thereto. The retransmission packet may be used as the reception signal for performing the signal separation process.

In the above description, the multi-carrier signal is used as the transmission and reception signals, but the single carrier signal may be used.
In the above description, the interleaving units 502 and 261, and the de-interleaving unit 210 are used. However, the interleaving units and the de-interleaving unit may not be used.
In the above description, the packet reception device 6 performing the iteration process using the separation of the frequency-domain signal has been described. However, the configuration of the packet reception device 6 according to this embodiment is applicable to a communication device performing the iteration process using separation of a time-domain signal.

The configuration of the packet reception device 6 according to this embodiment is applicable to a communication device using a frequency-domain soft canceller followed by minimum mean squared error filter (SC/MMSE)-type turbo equalization or time-domain SC/MMSE-type turbo equalization.
The MIMO configuration of the packet reception device 6 according to this embodiment is applicable to the packet reception devices 3 and 4 according to the second and third embodiments.

A program realizing the functions of: the coding unit 101, the interleaving unit 102, the modulation unit 103, the IFFT unit 104, the transmission signal information multiplexing unit 105, the GI insertion unit 106, the radio transmission unit 107, the radio reception unit 111, the GI removal unit 112, the FFT unit 113, the demodulation unit 114, the response signal determination unit 115, and the transmission signal storage unit 116 shown in FIG. 1; the radio reception unit 201, the GI removal unit 202, the separation unit 203, the transmission signal information analysis unit 204, the FFT unit 205, the interference cancellation unit 206, the propagation channel estimation unit 207, the propagation channel compensation unit 208, the demodulation unit 209, the de-interleaving unit 210, HARQ processing unit 211, the signal decoding unit 212, the retransmission control unit 213, the replica signal generation unit 214, the response signal generation unit 221, the modulation unit 222, the IFFT unit 223, the GI insertion unit 224, and the radio transmission unit 225 shown in FIG. 2; the radio reception unit 201, the GI removal unit 202, the separation unit 203, the transmission signal information analysis unit 204, the FFT unit 205, the propagation channel estimation unit 207, the reception signal storage unit 301, the signal detection unit 302, the subtraction unit 303, the de-interleaving unit 304, HARQ processing unit 305, the signal decoding unit 306, the retransmission control unit 307, the subtraction unit 308, the interleaving unit 309, the response signal generation unit 221, the modulation unit 222, the IFFT unit 223, the GI insertion unit 224, and the radio transmission unit 225 shown in FIG. 13; the radio reception unit 201, the GI removal unit 202, the separation unit 203, the transmission signal information analysis unit 204, the FFT unit 205, the propagation channel estimation unit 207, HARQ processing unit 401, the interference cancellation unit 402, the propagation channel compensation unit 208, the demodulation unit 209, the de-interleaving unit 210, the signal decoding unit 212, the retransmission control unit 213, the replica signal generation unit 214, the response signal generation unit 221, the modulation unit 222, the IFFT unit 223, the GI insertion unit 224, and the radio transmission unit 225 shown in FIG. 16; the coding unit 501, the interleaving unit 502, the modulation unit 503, the IFFT unit 504, the transmission signal information multiplexing unit 505, the GI insertion unit 506, the radio transmission unit 507, the radio reception unit 511, the GI removal unit 512, the FFT unit 513, the demodulation unit 514, the response signal determination unit 515, and the transmission signal storage unit 516 shown in FIG. 19; and the radio reception unit 601, the GI removal unit 602, the separation unit 603, the transmission signal information analysis unit 604, the FFT unit 605, the signal separation unit 606, the propagation channel estimation unit 607, the propagation channel compensation unit 608, the demodulation unit 209, the de-interleaving unit 210, HARQ processing unit 211, the signal decoding unit 212, the retransmission control unit 213, the replica signal generation unit 214, the response signal generation unit 221, the modulation unit 222, the IFFT unit 223, the GI insertion unit 224, and the radio transmission unit 225 shown in FIG. 20 is recorded in a computer-readable record medium. The program recorded in the record medium is read and executed in a computer system to perform the functions of the units. Here, the "computer system" includes an OS and a hardware device such as a peripheral device.

The "computer-readable recording medium" includes a storage device, including a portable medium such as a flexible disk, a magnetic optical disk, a ROM, and a CD-ROM, and a hard disk embedded in the computer system. Further, the "computer-readable recording medium" may include a medium for temporarily and dynamically storing programs, like a communication line when a program is transmitted via a network such as the Internet or a communication line such as a telephone line, and a medium for storing programs for a predetermined time, like a volatile memory inside a computer system consisting of a server and a client in that case. The program may be a program for realizing some of the above-described functions. Alternatively, the program may be a program capable of realizing the above-described functions through a combination with a program previously stored in a computer system.

The embodiments of the present invention have hitherto been described with reference to the drawings, but the present invention is not limited to the specific configurations of the embodiments. However, the appended claims are intended to cover modifications without departing from the scope of the present invention.

Industrial Applicability

The present invention is suitable for uplink and downlink communications of a mobile communication system including a mobile station device and a base station device, but is not limited thereto.

**Claims**

1. A communication device used in a communication system performing a hybrid automatic repeat request to request a retransmission signal when detecting an error in a received initial transmission signal, the communication device comprising:

   a reception unit which receives the initial transmission signal and the retransmission signal;
   a synthesis unit which synthesizes a signal based on a retransmission signal and at least one of a signal based on a retransmission signal received before the retransmission signal and a signal based on the initial transmission signal, when the reception unit receives the retransmission signal; and
   an iterative detection and decoding unit which performs an iteration process of repeating signal detection and signal decoding on the signal received by the reception unit or a signal received previously by the reception unit and performs signal decoding based on a signal obtained through the synthesis in the synthesis unit in every iteration process when the reception unit receives the retransmission signal.

2. The communication device according to claim 1, further comprising:

   a synthesis signal storage unit which stores a signal detection result of the iterative detection and decoding unit, wherein the iterative detection and decoding unit performs signal decoding based on the signal obtained through the synthesis in the synthesis unit in every iteration process when the reception unit receives the retransmission signal, and

when the reception unit receives the retransmission signal, the synthesis unit synthesizes, in every iteration process of the iterative detection and decoding unit, the signal detection result of the iterative detection and decoding unit and at least one of the signal detection results stored in the synthesis signal storage unit, which are signal detection results of the iterative detection and decoding unit when the reception unit previously receives retransmission signals.

3. The communication device according to claim 2, further comprising:

a reception signal storage unit which stores a signal received by the reception unit,
wherein the signal detection performed by the iterative detection and decoding unit is performed on either one of the signal received previously by the reception unit and stored in the reception signal storage unit and the signal received by the reception unit in every iteration process.

4. The communication device according to claim 3, wherein the signal detection performed by the iterative detection and decoding unit is performed on either one of the initial transmission signal stored in the reception signal storage unit and the signal received by the reception unit in every iteration process.

5. The communication device according to claim 3, wherein the signal detection performed by the iterative detection and decoding unit is performed on either one of the signal received by the reception unit and the signal stored in the reception signal storage unit and received immediately before the signal received by the reception unit in every iteration process.

6. The communication device according to claim 2, wherein the synthesis signal storage unit stores either one of the signal detection results obtained in every iteration by the iteration signal detection unit in every iteration process.

7. The communication device according to claim 2, wherein the synthesis signal storage unit stores the signal detection result obtained in every iteration by the iteration signal detection unit.

8. The communication device according to claim 2, wherein a signal to be synthesized by the synthesis unit necessarily comprises the signal detection result obtained by the iterative detection and decoding unit when the reception unit previously receives the initial transmission signal.

9. The communication device according to claim 2, wherein a signal to be synthesized by the synthesis unit is likelihood information indicating whether each bit is 1 or 0 using a likelihood ratio.

10. The communication device according to claim 1, wherein the iterative detection and decoding unit performs signal detection on a signal received by the reception unit or a signal received previously by the reception unit by removing an interference component using an interference signal replica generated based on a result of the signal decoding.

11. The communication device according to claim 10, wherein the iterative detection and decoding unit generates an interference signal replica of at least one interference component of inter-symbol interference, carrier interference, and inter-code interference to remove the interference component.

12. The communication device according to claim 1, wherein the iterative detection and decoding unit performs the signal detection on a signal received by the reception unit or a signal received previously by the reception unit based on a result of the signal decoding.

13. The communication device according to claim 1, wherein when the reception unit receives a retransmission signal, the synthesis unit synthesizes the retransmission signal received by the reception unit and at least one of the retransmission signal received before the retransmission signal and the initial transmission signal, and
when the reception unit receives the retransmission signal, the iterative detection and decoding unit performs the signal detection and the signal decoding based on the signal obtained through the synthesis in the synthesized unit in every iteration process.

14. The communication device according to claim 1, wherein the reception unit receives a signal in which a stream is spatially multiplexed, from each of a plurality of antennas, as well as the initial transmission signal and the retransmission signal, and
the iterative detection and decoding unit separates a signal of the stream from the signal received by the reception unit, when performing the signal detection.

15. A communication system comprising first and second communication devices, the second communication device performing a hybrid automatic repeat request to request a retransmission signal when detecting an error in an initial transmission signal received from the first communication device,
wherein the first communication device comprises:

a transmission unit which transmits the initial transmission signal and at least one retransmission signal, and the second communication device comprises:

a reception unit which receives the initial transmission signal and the retransmission signal;
a synthesis unit which synthesizes a signal based on a retransmission signal and at least one of a signal based on a retransmission signal received before the retransmission signal and a signal based on the initial transmission signal, when the reception unit receives the retransmission signal; and
an iterative detection and decoding unit which performs an iteration process of repeating signal detection and signal decoding on the signal received by the reception unit or a signal received previously by the reception unit and performs signal decoding based on a signal obtained through the synthesis in the synthesis unit in every iteration process, when the reception unit receives the retransmission signal.

16. A reception method in a communication device used in a communication system performing a hybrid automatic repeat request to request a retransmission signal when detecting an error in a received initial transmission signal, the reception method comprising:

receiving, by the communication device, the retransmission signal;
synthesizing, by the communication device, a signal based on the retransmission signal received in the reception and at least one of a signal based on a retransmission signal received before the retransmission signal and a signal based on the initial transmission signal; and
performing, by the communication device, an iteration process of repeating signal detection and signal decoding on the signal received in the reception or the signal received previously and performing signal decoding based on a signal obtained through the synthesis in the synthesis in every iteration process.

17. A communication method in a communication system comprising first and second communication devices, the second communication device performing a hybrid automatic repeat request to request a retransmission signal when detecting an error in an initial transmission signal received from the first communication device, wherein the communication method comprises:

transmitting, by the first communication device, the initial transmission signal;
receiving, by the second communication device, the initial transmission signal and requesting the first communication device to transmit the retransmission signal when detecting an error in the received initial transmission signal;
receiving, by the first communication device, the request for the retransmission signal and transmitting the retransmission signal;
receiving, by the second communication device, the retransmission signal;
synthesizing, by the second communication device, a signal based on the retransmission signal received in the retransmission signal reception and at least one of a signal based on a retransmission signal received before the retransmission signal and a signal based on the initial transmission signal; and
performing, by the second communication device, an iteration process of repeating signal detection and signal decoding on the signal received in the retransmission signal reception or the signal received previously and performing signal decoding based on a signal obtained through the synthesis in the synthesis in every iteration process.

FIG. 1

# FIG. 2

PACKET RECEPTION DEVICE 2

REPLICA SIGNAL GENERATION UNIT ~214

TRANSMISSION SIGNAL INFORMATION ANALYSIS UNIT ~204

DE-INTERLEAVING UNIT ~210

HARQ PROCESSING UNIT ~211

SIGNAL DECODING UNIT ~212

RETRANSMISSION CONTROL UNIT ~213

PACKET

RADIO RECEPTION UNIT 201

GI REMOVAL UNIT 202

SEPARATION UNIT 203

FFT UNIT 205

INTERFERENCE CANCELLATION UNIT ~206

PROPAGATION CHANNEL COMPENSATION UNIT ~208

DEMODULATION UNIT ~209

SIGNAL DETECTION UNIT 215

ITERATIVE DETECTION AND DECODING UNIT 216

PROPAGATION CHANNEL ESTIMATION UNIT ~207

FROM ANTENNA

TO ANTENNA

RADIO TRANSMISSION UNIT ~225

GI INSERTION UNIT ~224

IFFT UNIT ~223

MODULATION UNIT ~222

RESPONSE SIGNAL GENERATION UNIT ~221

225   224   223   222   221

EP 2 247 019 A1

31

# FIG. 3

REPLICA SIGNAL
(FROM REPLICA SIGNAL GENERATION UNIT 214)

206 --- INTERFERENCE CANCELLATION UNIT

231

INTERFERENCE SIGNAL REPLICA GENERATION UNIT

PROPAGATION CHANNEL ESTIMATION VALUE
(FROM PROPAGATION CHANNEL ESTIMATION UNIT 207)

RECEPTION SIGNAL
(FROM FFT UNIT 205)

232

SUBTRACTION UNIT

TO PROPAGATION CHANNEL COMPENSATION UNIT 208

233

RECEPTION SIGNAL STORAGE UNIT

RETRANSMISSION CONTROL INFORMATION
(FROM RETRANSMISSION CONTROL UNIT 213)

# FIG. 4

RETRANSMISSION CONTROL INFORMATION
(FROM RETRANSMISSION CONTROL UNIT 213)

242

SYNTHESIS PACKET STORAGE UNIT

241

PACKET SYNTHESIS UNIT

TO SIGNAL DECODING UNIT 212

FROM DE-INTERLEAVING UNIT 210

HARQ PROCESSING UNIT --211

# FIG. 5

CODED BIT LLR
(REPLICA SIGNAL GENERATION UNIT 214)

212

SIGNAL DECODING UNIT

251

FROM HARQ PROCESSING
UNIT 211

ERROR
CORRECTION
DECODING
UNIT

CODED BIT LLR

252

ERROR
DETECTION
UNIT

DECODED BIT ERROR
AND DETECTION
INFORMATION

(TO RETRANSMISSION
CONTROL UNIT 213)

# FIG. 6

214

REPLICA SIGNAL GENERATION UNIT

261

CODED BIT LLR
(FROM SIGNAL
DECODING UNIT 212)

INTERLEAVING
UNIT

262

MODULATION
UNIT

FREQUENCY DOMAIN
REPLICA SIGNAL

(TO INTERFERENCE
CANCELLATION UNIT 206)

# FIG. 7

START

RECEIVE INITIAL TRANSMISSION PACKET — S101

STORE INITIAL TRANSMISSION PACKET — S102

RECEIVE RETRANSMISSION PACKET — S115

GENERATE RETRANSMISSION CONTROL INFORMATION — S116

DETECT SIGNAL — S103

INITIAL PROCESS? — S104 → NO

YES — STORE SYNTHESIS PACKETS — S105

INITIAL TRANSMISSION PACKET? — S106 → YES

NO — SYNTHESIZE PACKETS — S107

DECODE SIGNAL — S108

IS ERROR DETECTED? — S109 → YES

INTERFERENCE CANCELLATION — S113

GENERATE REPLICA SIGNAL — S112

ITERATION PROCESS? — S111 → YES

NO — TRANSMIT NACK — S114

NO — TRANSMIT ACK — S110

END

# FIG. 8

EP 2 247 019 A1

# FIG. 9

| CODING RATE: 1/3 | CODING RATE: 1/2 | CODING RATE: 3/4 |
|---|---|---|
| $\begin{pmatrix} x \\ y \\ z \end{pmatrix} = \begin{pmatrix} 1 \\ 1 \\ 1 \end{pmatrix}$ | $\begin{pmatrix} x \\ y \\ z \end{pmatrix} = \begin{pmatrix} 1 & 1 \\ 1 & 0 \\ 0 & 1 \end{pmatrix}$ | $\begin{pmatrix} x \\ y \\ z \end{pmatrix} = \begin{pmatrix} 1 & 1 & 1 & 1 & 1 & 1 \\ 1 & 0 & 0 & 0 & 0 & 0 \\ 0 & 0 & 0 & 1 & 0 & 0 \end{pmatrix}$ |

# FIG. 10

FROM HARQ PROCESSING UNIT 211

INPUT SIGNAL

| A | B | C | D | E | G | J | L |
|---|---|---|---|---|---|---|---|

251

ERROR CORRECTION
DECODING UNIT

253

DE-PUNCTURING
UNIT

| A | B | C | D | E | 0 | G | 0 | 0 | 0 | J | 0 | L |
|---|---|---|---|---|---|---|---|---|---|---|---|---|

254

ERROR CORRECTION
DECODING PROCESSING
UNIT

OUTPUT SIGNAL

| a' | b' | c' | d' | e' | f' | g' | h' | i' | j' | k' | l' |
|---|---|---|---|---|---|---|---|---|---|---|---|

TO ERROR DETECTION UNIT 252

# FIG. 11

| | CODING RATE:1/2 |
|---|---|
| INITIAL TRANSMISSION PACKET | $\begin{pmatrix} x \\ y \\ z \end{pmatrix} = \begin{pmatrix} 1 & 1 \\ 1 & 0 \\ 0 & 1 \end{pmatrix}$ |
| RETRANSMISSION PACKET | $\begin{pmatrix} x \\ y \\ z \end{pmatrix} = \begin{pmatrix} 1 & 1 \\ 0 & 1 \\ 1 & 0 \end{pmatrix}$ |

# FIG. 12

| CODED BIT LLR OF INITIAL TRANSMISSION PACKET | A1, B1, C1, D1, E1, 0, G1, 0, 0, J1, 0, L1 |
|---|---|
| CODED BIT LLR OF RETRANSMISSION PACKET | A2, B2, C2, D2, 0, F2, 0, H2, I2, 0, K2, 0 |
| CODED BIT LLR AFTER SYNTHESIS | A1+A2, B1+B2, C1+C2, D1+D2, E1, F2, G1, H2, I2, J1, K2, L1 |

## FIG. 13

PACKET RECEPTION DEVICE $\sim 3$

- 309 INTERLEAVING UNIT
- 308 SUBTRACTION UNIT $\Lambda_2$ [b(i)]
- $\lambda_2^p$ [b(k)]
- $\lambda_2$ [b(i)]
- 301 RECEPTION SIGNAL STORAGE UNIT
- 204 TRANSMISSION SIGNAL INFORMATION ANALYSIS UNIT
- 305 HARQ PROCESSING UNIT
- 306 SIGNAL DECODING UNIT
- $\lambda_1^p$ [b(i)]
- RETRANSMISSION CONTROL UNIT
- 307
- PACKET

FROM ANTENNA

- 201 RADIO RECEPTION UNIT
- 202 GI REMOVAL UNIT
- 203 SEPARATION UNIT
- 205 FFT UNIT
- 302 SIGNAL DETECTION UNIT $\Lambda_1$ [b(k)]
- 303 SUBTRACTION UNIT $\lambda_1$ [b(k)]
- 304 DE-INTERLEAVING UNIT $\lambda_1^p$ [b(i)]
- ITERATIVE DETECTION AND DECODING UNIT
- 300

- 207 PROPAGATION CHANNEL ESTIMATION UNIT

TO ANTENNA

- 225 RADIO TRANSMISSION UNIT
- 224 GI INSERTION UNIT
- 223 IFFT UNIT
- 222 MODULATION UNIT
- 221 RESPONSE SIGNAL GENERATION UNIT

EP 2 247 019 A1

# FIG. 14

RETRANSMISSION CONTROL INFORMATION
(FROM RETRANSMISSION CONTROL UNIT 307)

312

SYNTHESIS PACKET
STORAGE UNIT

311

FROM DE-INTERLEAVING
UNIT 304

PACKET
SYNTHESIS UNIT

TO SIGNAL DECODING
UNIT 306

HARQ PROCESSING UNIT ---305

# FIG. 15

(SUBTRACTION UNIT 308)

306

SIGNAL DECODING UNIT

321

322

FROM HARQ PROCESSING
UNIT 305

ERROR
CORRECTION
DECODING
UNIT

$\Lambda_2[b(i)]$

ERROR
DETECTION
UNIT

DECODED BITS
ERROR DETECTION
INFORMATION

(RETRANSMISSION
CONTROL UNIT 307)

# FIG. 16

FIG. 17

RETRANSMISSION CONTROL INFORMATION
(FROM RETRANSMISSION CONTROL UNIT 213)

412

SYNTHESIS PACKET
STORAGE UNIT

411

FROM FFT
UNIT 205

PACKET
SYNTHESIS
UNIT

TO INTERFERENCE
CANCELLATION UNIT 402
TO PROPAGATION CHANNEL
ESTIMATION UNIT 207

HARQ PROCESSING UNIT ---401

FIG. 18

REPLICA SIGNAL
(FROM REPLICA SIGNAL GENERATION UNIT 214)

402--- INTERFERENCE
CANCELLATION UNIT

231

PROPAGATION CHANNEL
ESTIMATION VALUE
(FROM PROPAGATION CHANNEL
ESTIMATION UNIT 207)

INTERFERENCE SIGNAL
REPLICA GENERATION
UNIT

232

RECEPTION SIGNAL
(FROM HARQ PROCESSING
UNIT 401)

SUBTRACTION UNIT

TO PROPAGATION CHANNEL
COMPENSATION UNIT 208

## FIG. 19

# FIG. 20

PACKET RECEPTION DEVICE ~6

214 REPLICA SIGNAL GENERATION UNIT

604 TRANSMISSION SIGNAL INFORMATION ANALYSIS UNIT

210 DE-INTERLEAVING UNIT

211 HARQ PROCESSING UNIT

212 SIGNAL DECODING UNIT

RETRANSMISSION CONTROL UNIT

PACKET

213

600-M RECEPTION PROCESSING UNIT FOR EACH ANTENNAS

600-1 RECEPTION PROCESSING UNIT FOR EACH ANTENNAS

601 RADIO RECEPTION UNIT

602 GI REMOVAL UNIT

603 SEPARATION UNIT

605 FFT UNIT

FROM RECEPTION ANTENNAS

606 SIGNAL SEPARATION UNIT

608 PROPAGATION CHANNEL COMPENSATION UNIT

209 DEMODULATION UNIT

SIGNAL DETECTION UNIT

615

607 PROPAGATION CHANNEL ESTIMATION UNIT

ITERATIVE DETECTION AND DECODING UNIT

616

TO ANTENNA

225 RADIO TRANSMISSION UNIT

224 GI INSERTION UNIT

223 IFFT UNIT

222 MODULATION UNIT

221 RESPONSE SIGNAL GENERATION UNIT

# FIG. 21

(FROM REPLICA SIGNAL GENERATION UNIT 214)
REPLICA SIGNAL

606 — SIGNAL SEPARATION UNIT

PROPAGATION CHANNEL ESTIMATION VALUE — (FROM PROPAGATION CHANNEL ESTIMATION UNIT 607)

634
INTERFERENCE REPLICA GENERATION UNIT

RECEPTION SIGNAL (FROM FFT UNIT 605)

635
SUBTRACTION UNIT

TO PROPAGATION CHANNEL COMPENSATION UNIT 608

633
RECEPTION SIGNAL STORAGE UNIT

RETRANSMISSION CONTROL INFORMATION
(FROM RETRANSMISSION CONTROL UNIT 213)

# FIG. 22

EP 2 247 019 A1

## INTERNATIONAL SEARCH REPORT

| | International application No. |
|---|---|
| | PCT/JP2009/052903 |

**A. CLASSIFICATION OF SUBJECT MATTER**
*H04L1/18(2006.01)i, H04J11/00(2006.01)i, H04J99/00(2009.01)i*

According to International Patent Classification (IPC) or to both national classification and IPC

**B. FIELDS SEARCHED**

Minimum documentation searched (classification system followed by classification symbols)
H04L1/18, H04J11/00, H04J99/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Tatsunori YUI et al., "ICI Canceller o Mochiiru Turbo Fugoka MC-CDMA ni Okeru Hantei Kikan Channel Suitei", IEICE Technical Report, RCS 107 (262), The Institute of Electronics, Information and Communication Engineers, 11 October, 2007 (11.10.07), pages 7 to 12 | 1-13,15-17 |
| X | Koichi ADACHI et al., "Kurikaeshi Henkei QRD-M Shingo Bunriho o Mochiiru OFDM MIMO no HARQ Throughput Tokusei", IEICE Technical Report, RCS 107(147), The Institute of Electronics, Information and Communication Engineers, 2007. 07, pages 47 to 52 | 1-10,12-17 |
| | | 1 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 April, 2009 (03.04.09) | 19 May, 2009 (19.05.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/052903 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | Nobuhiko MIKI et al., "Kudari Link Kosoku Packet Denso ni Okeru Packet Goseigata Hybrid ARQ ni Tekishita Nan Hantei Replica o Mochiiru Multipath Kansho Canceller no Tokusei", IEICE Technical Report, AP 101(368), The Institute of Electronics, Information and Communication Engineers, 2001.10, pages 99 to 104 | 1-13,15-17 |
| X | JP 2007-184926 A  (NTT Docomo Inc.), 19 July, 2007 (19.07.07), Par. Nos. [0014], [0028] to [0030], [0081], [0097], [0102], [0136], [0166]; 1, 2, 9-11 & CN 1992581 A | 1-10,12,13, 15-17 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008040007 A
- JP 2004221702 A
- JP 2005198223 A

### Non-patent literature cited in the description

- **Y. Zhou ; J. Wang ; M. Sawahashi.** Downlink Transmission of Broadband OFCDM Systems-Part I: Hybrid Detection. *IEEE Transaction on Communication,* April 2005, vol. 53 (4), 718-729
- **D. Chase.** Code combining-A maximum likelihood decoding approach for combing and arbitrary number of noisy packets. *IEEE Trans. Commun.,* May 1985, vol. COM-33, 385-393
- **J. Hagenauer.** Rate-compatible punctured convolutional codes (RCPC codes) and their application. *IEEE Trans. Commun.,* April 1988, vol. 36, 389-400